# EUROPEAN PATENT APPLICATION

(11) **EP 4 246 301 A1**
(43) Date of publication of application: **20.09.2023**
(21) Application number: 23159776.6
(22) Date of filing: 02.03.2023
(51) Int. Cl.: G06F 3/04883

(54) **DISPLAY APPARATUS, FORMATTING METHOD, CARRIER MEANS, AND INFORMATION SHARING SYSTEM**

(30) Priority: 18.03.2022 JP 2022044208
(71) Applicant: Ricoh Company, Ltd., Tokyo 143-8555 (JP)
(72) Inventor: Oshima, Yoshiaki, Tokyo, 143-8555 (JP)
(74) Representative: Marks & Clerk LLP

(57) **Abstract**

A display apparatus (2) includes an input receiving unit (21) configured to receive an input of hand drafted data. The display apparatus (2) includes a display control unit (24) configured to display, as an object, the hand drafted data or text converted from the hand drafted data. The display apparatus (2) includes a formatting unit (50) configured to adjust attribute values of multiple objects displayed by the display control unit (24), the multiple objects including the object displayed based on the input.

## Description

### BACKGROUND

### Technical Field

Embodiments of the present disclosure relate to a display apparatus, a formatting method, carrier means, and an information sharing system.

### Related Art

Display apparatuses are known that convert hand drafted data or an object such as text obtained by converting hand drafted data to a character string (character codes) and display the character string on a display by using a handwriting recognition technique. Such a display apparatus having a relatively large touch panel is used as, for example, an electronic whiteboard by a plurality of users in a conference room or a public facility.

Technologies to format a hand drafted character string are known (e.g., Japanese Unexamined Patent Application Publication No. 2003-208416). Japanese Unexamined Patent Application Publication No. 2003-208416 discloses technologies to collectively converting handwritten characters at a desired timing and format an outline of a character string.

However, in the related art, attribute values of multiple objects do not correspond to each other. For example, when a user inputs multiple pieces of text, attribute values such as a size and a display direction of the multiple pieces of text sometimes vary differ from each other.

### SUMMARY

In view of the above, an object of the present invention is to provide a display apparatus that adjusts attribute values of multiple objects.

An embodiment of the present invention includes a display apparatus. The display apparatus includes an input receiving unit configured to receive an input of hand drafted data. The display apparatus includes a display control unit configured to display, as an object, the hand drafted data or text converted from the hand drafted data. The display apparatus includes a formatting unit configured to adjust attribute values of multiple objects displayed by the display control unit, the multiple objects including the object displayed based on the input.

An embodiment of the present invention includes a formatting method performed by a display apparatus. The method includes receiving, by an input receiving unit, an input of hand drafted input data. The method includes displaying, by a display control unit, the hand drafted data or text converted from the hand drafted data as an object. The method includes adjusting, by a formatting unit, attribute values of multiple objects being displayed, the multiple objects including the object including the object displayed based on the input.

An embodiment of the present invention includes carrier means carrying computer readable codes for controlling a display apparatus to perform a method. The method includes receiving, by an input receiving unit, an input of hand drafted input data. The method includes displaying, by a display control unit, the hand drafted data or text converted from the hand drafted data as an object. The method includes adjusting, by a formatting unit, attribute values of multiple objects being displayed, the multiple objects including the object displayed based on the input.

An embodiment of the present invention includes an information sharing system including at least two multiple display apparatuses communicable with each other through a network. Each of the at least two display apparatuses includes an input receiving unit configured to receive an input of hand drafted data. Each of the at least two display apparatuses includes a display control unit configured to display, as an object, the hand drafted data or text converted from the hand drafted data. Each of the at least two display apparatuses includes a formatting unit configured to adjust attribute values of multiple objects being displayed, the multiple objects including the object displayed based on the input. The formatting unit of one display apparatus of the at least two display apparatuses is configured to, in response to receiving input data and a content of formatting from another display apparatus of the at least two display apparatuses, adjust attribute values of the multiple objects according to the content of formatting.

According to an aspect of the present disclosure, a display apparatus is provided that adjusts attribute values of multiple objects.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a diagram illustrating an example of how multiple objects that are input by one or more users are formatted, according to an embodiment of the present invention;
FIG. 2A to FIG. 2C are diagrams each illustrating an example of a placement of a display apparatus in use, according to an embodiment of the present invention;
FIG. 3 is a block diagram illustrating an example of a hardware configuration of the display apparatus, according to an embodiment of the present invention;
FIG. 4 is a block diagram illustrating an example of a functional configuration of the display apparatus, according to an embodiment of the present invention;
FIG. 5A to FIG. 5C are schematic diagrams illustrating examples of input data, according to an embodiment of the present invention;
FIG. 6 is a diagram illustrating an example of an operation guide and selectable candidates displayed by the operation guide, according to an embodiment of the present invention;
FIG. 7 is a diagram illustrating an example of an input screen including a format icon, according to an embodiment of the present invention;
FIG. 8 is a diagram for describing a display direction, according to an embodiment of the present invention;
FIG. 9 is a diagram schematically illustrating correspondence between a user's hand drafted input direction and a display direction, according to an embodiment of the present invention;
FIG. 10 is a diagram schematically illustrating correspondence between a position of a user's hand drafted input direction and a display direction, according to an embodiment of the present invention;
FIG. 11 is a diagram illustrating an example of formatting of an object on the basis of a size of the object, according to an embodiment of the present invention;
FIG. 12A and FIG. 12B are diagrams each illustrating an example of formatting an object when one or more of multiple objects is hand drafted data, according to an embodiment of the present invention;
FIG. 13 is a diagram illustrating an example of formatting of an object on the basis of an orientation of the object, according to an embodiment of the present invention;
FIG. 14 is a diagram illustrating an example of formatting in which indents of multiple objects are adjusted, according to an embodiment of the present invention;
FIG. 15 is a diagram illustrating an example of formatting in which forms of multiple objects are adjusted, according to an embodiment of the present invention;
FIG. 16 is a diagram illustrating an example of formatting of an object on the basis of a language of an object, according to an embodiment of the present invention;
FIG. 17 is a diagram illustrating an example of formatting of an object on the basis of languages of multiple objects, according to an embodiment of the present invention;
FIG. 18 is a diagram for describing how to select an attribute to be used for formatting with the operation guide, according to an embodiment of the present invention;
FIG. 19 is a flowchart illustrating an operation of formatting an object performed by the display apparatus, according to an embodiment of the present invention;
FIG. 20 is a block diagram illustrating a functional configuration of the display apparatus, according to an embodiment (Embodiment 2) of the present invention;
FIG. 21 is a diagram illustrating a modified example of pen information stored in a pen information storage unit, according to an embodiment of the present invention;
FIG. 22 is a diagram illustrating an example of formatting using the pen information of FIG. 21, according to an embodiment of the present invention;
FIG. 23 is a diagram for describing an example of formatting an object on the basis of an attribute value set for a pen associated with an attribute value that is most frequently used, according to an embodiment of the present invention;
FIG. 24 is a diagram for describing an example of formatting an object using an attribute value of text having the largest number of characters, according to an embodiment of the present invention;
FIG. 25 is a diagram for describing an example of formatting an object on the basis of an attribute value of text whose size is the largest, according to an embodiment of the present invention;
FIG. 26 is a diagram for describing an example of formatting an object on the basis of an attribute value of text having the largest weight of the number of characters and a size, according to an embodiment of the present invention;
FIG. 27 is a diagram illustrating an example of an attribute value determination method selection screen displayed by the display apparatus, according to an embodiment of the present invention;
FIG. 28 is a flowchart illustrating an operation performed by the display apparatus of determining an attribute value to be used for formatting an object according to an attribute value determination method selected by a user, according to an embodiment of the present invention;
FIG. 29 is a diagram illustrating an example of a system configuration of an information sharing system, according to an embodiment of the present invention;
FIG. 30 is a block diagram illustrating an example of a hardware configuration of an information management server, according to an embodiment of the present invention;
FIG. 31 is a block diagram illustrating an example of a functional configuration of the information management server, according to an embodiment of the present invention;
FIG. 32 is a diagram for describing formatting of an object in which an attribute of formatting at one site is shared with at another site, according to an embodiment of the present invention;
FIG. 33 is a diagram for describing formatting of an object in which formatting at one site is shared according to an attribute value corresponding to another site, according to an embodiment of the present invention;
FIG. 34 illustrates an example of a formatting sharing setting screen that allows a user to configure settings relating to formatting in remote communication, according to an embodiment of the present invention; and
FIG. 35 is a sequence diagram illustrating an operation performed by the display apparatuses when settings are configured on the formatting sharing setting screen at the display apparatus, according to an embodiment of the present invention.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

A description is given below of a display apparatus and a formatting method performed by the display apparatus according to one or more embodiments of the present disclosure, with reference to the attached drawings.

### Embodiment 1

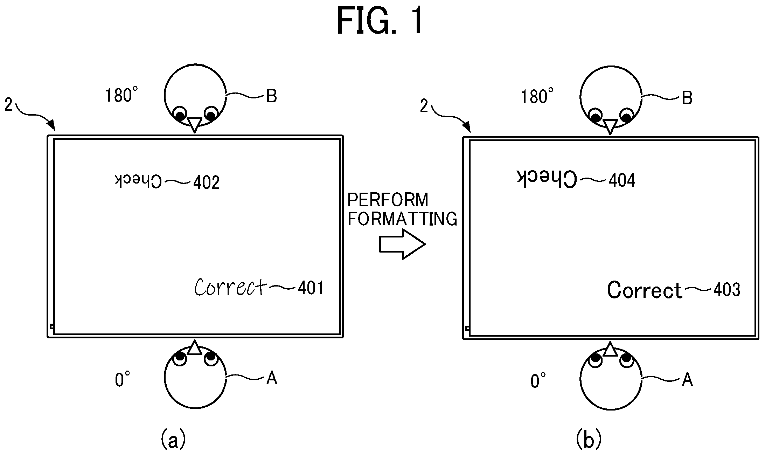

Referring to FIG. 1, an overview of formatting an object is described. FIG. 1 is a diagram illustrating an example of how multiple objects that are input by one or more users are formatted. Illustration (a) of FIG. 1 is an example of hand drafted data input by multiple users. Hand drafted data 401 "Correct" is input by User A. Text 402 "Check" is input by User B. In Illustration (a) of FIG. 1, the sizes of the hand drafted data 401 and the text 402 are different as they are input by different users. Thus, when multiple persons input hand drafted data or text, they are random and unsuitable for viewing.

In view of such as issue, User A or B instructs to perform formatting. Illustration (b) of FIG. 1 is an example of text 403 and text 404 formatted according to an instruction by User A. In response to the instruction for formatting by User A, a display apparatus 2 displays multiple pieces of text, e.g., the text 403 and the text 404 in the same size. This makes the text 403 and the text 404 suitable for viewing by User A and User B.

FIG. 1 illustrates an example in which the hand drafted data 401 is converted into text and then is formatted. In another example, the hand drafted data 401 in Illustration (a) of FIG. 1 before being formatted may be text. In another example, in a case that an object is hand drafted data before being formatted, the object may remain as hand drafted data after being formatted. In this case, character recognition is omitted.

Examples of the attributes of the object include, in addition to the size, a display direction, an indent, a form such as a font or color, and a language. A detailed description of this is given below.

### Terms

The term "input means" or "input device" refers to any devices or means with which a user hand drafted input is performable by designating coordinates on a touch panel. Examples of the input means or the input device include, but are not limited to, a pen, a human finger, a human hand, and a bar-shaped member.

A series of user operations including engaging a writing mode, recording movement of an input device or portion of a user, and then disengaging the writing mode is referred to as a stroke. The engaging of the writing mode may include, if desired, pressing an input device or input means against a display or screen, and disengaging the writing mode may include releasing the input device or the input means from the display or screen. Alternatively, a stroke includes tracking movement of the portion of the user without contacting a display or screen. In this case, at the display apparatus, the writing mode may be engaged or turned on by a gesture of a user, pressing a button by a hand or a foot of the user, or otherwise turning on the writing mode, for example using a pointing device such as a mouse. The disengaging of the writing mode can be accomplished by the same or different gesture used to engage the writing mode, releasing the button, or otherwise turning off the writing mode, for example using the pointing device or mouse.

The term "stroke data" refers to data based on a trajectory of coordinates of a stroke input with the input device or the input means, and the coordinates may be interpolated appropriately. The term "hand drafted data" refers to data having one or more pieces of stroke data. In the present disclosure, a "hand drafted input" relates to a user input data such as handwriting, drawing, and other forms of input. The hand drafted input may be performed via touch interface, with a tactile object such as a pen or stylus or with the user's body. The hand drafted input may also be performed via other types of input, such as gesture-based input, hand motion tracking input or other touch-free input by a user. The following discussion of embodiments may refer to hand drafted input and hand drafted input data, but other forms of hand drafted input may be utilized and are within the scope of the present disclosure.

The term "object" refers to an item displayed on a display based on stroke data.

The term "object" in this specification also represents an object to be displayed in the embodiments.

Examples of "object" obtained by handwriting recognition or hand drafted recognition and conversion of stroke data include, in addition to text, a stamp of a given character or mark such as "done," a shape such as a circle or a star, and a line. A result obtained by performing character recognition on hand drafted data is referred to as "text."

The term "attribute" refers to a property that characterizes an object. In the present embodiment, the attribute may be a property relating to a mode of an object. Examples of the attribute include a display direction, a size, an indent, a form, and a display language. An attribute value is a value set for an attribute. When the attribute is a display direction, the attribute value is, for example, an angle. When the attribute is a size, the attribute value is, for example, the number of points. When the attribute is an indent, the attribute value is, for example, a distance from the left end of the display. When the attribute is a form, the attribute value is, for example, a font name. When the attribute is a display language, the attribute value is, for example, Japanese.

The term "indent" originally refers to start a line further away from the edge of a screen or a display than all the other line. However, in the present embodiment, the term "indent" refers to align the head, center, or end of an object.

"To format an object" refers to adjust attribute values of multiple objects. In one example, the display apparatus 2 changes only an attribute value of one object without changing an attribute value of the other object. In another example, the display apparatus 2 changes the attribute values of both objects.

The term "adjust" refers to make a thing or an item to have the same shape or the same degree. The shape or the degree does not have to be completely the same. It suffices that the shape or the degrees is similar to each other in a manner that a user can recognize that the shape or the degree are substantially the same.

### Configuration of Apparatus

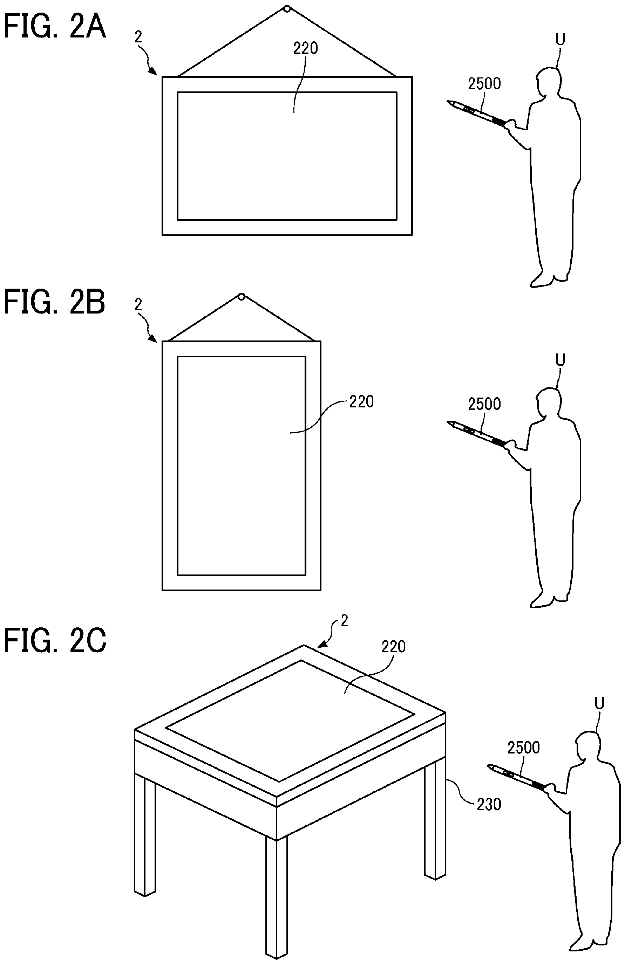

Referring to FIG. 2A to FIG. 2C, an overall configuration of the display apparatus 2 is described according to the present embodiment. FIG. 2A to FIG. 2C are diagrams each illustrating an example of a placement of the display apparatus 2 in use according to the present embodiment. FIG. 2A illustrates, as an example of the display apparatus 2, the display apparatus 2 used as an electronic whiteboard having a landscape-oriented rectangular shape and being hung on a wall.

As illustrated in FIG. 2A, the display apparatus 2 includes a display 220. A user U handwrites (also referred to as "inputs" or "draws"), for example, a character on the display 220 using a pen 2500.

FIG. 2B illustrates, as another example of the display apparatus 2, an electronic whiteboard having a portrait-oriented rectangular shape and being hung on a wall.

FIG. 2C illustrates, as another example, the display apparatus 2 placed on the top of a desk 230. Since the display apparatus 2 has a thickness of about 1 centimeter, the height of the desk 230 does not need to be adjusted when the display apparatus is placed on the top of the desk 230, which is a general-purpose desk. Further, the display apparatus 2 is portable and easily moved by the user.

Examples of an input method of coordinates by using the pen 2500 include an electromagnetic induction method and an active capacitive coupling method. In another example, the pen 2500 further has functions such as pen pressure detection, inclination detection, or a hover function (displaying a cursor before the pen is brought into contact).

### Hardware Configuration

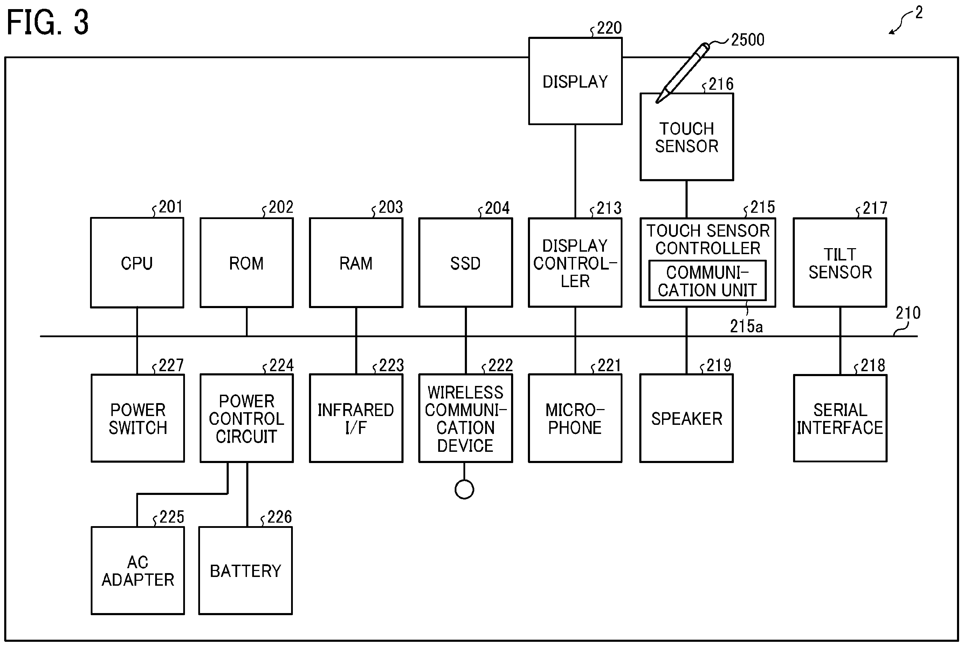

A hardware configuration of the display apparatus 2 according to the present embodiment is described with reference to FIG. 3. The display apparatus 2 has a configuration of an information processing apparatus or a computer as illustrated in the drawing. FIG. 3 is a block diagram illustrating an example of the hardware configuration of the display apparatus 2. As illustrated in FIG. 3, the display apparatus 2 includes a central processing unit (CPU) 201, a read only memory (ROM) 202, a random access memory (RAM) 203, and a solid state drive (SSD) 204.

The CPU 201 controls overall operation of the display apparatus 2. The ROM 202 stores a program such as an initial program loader (IPL) to boot the CPU 201. The RAM 203 is used as a work area for the CPU 201.

The SSD 204 stores various data such as an operating system (OS) and a program for the display apparatus 2. This program is, for example, an application program that runs on an information processing apparatus installed with a general-purpose OS such as Windows^{®}, Mac OS^{®}, Android^{®}, or iOS^{®}.

The display apparatus 2 further includes a display controller 213, a touch sensor controller 215, a touch sensor 216, the display 220, a power switch 227, a tilt sensor 217, a serial interface 218, a speaker 219, a microphone 221, a wireless communication device 222, an infrared interface (I/F) 223, a power control circuit 224, an alternating current (AC) adapter 225, and a battery 226.

The display controller 213 controls display of an image for output to the display 220, for example. The touch sensor 216 detects that the pen 2500, a user's hand or the like is brought into contact with the display 220. The pen or the user's hand is an example of input means or input device. The touch sensor 216 also receives a pen identifier (ID).

The touch sensor controller 215 controls processing of the touch sensor 216. The touch sensor 216 performs coordinate input and coordinate detection. Specifically, the touch sensor 216 performs the coordinate input and the coordinate detection as follows. For example, in a case of optical sensing, two light receiving and emitting devices disposed on both upper side ends of the display 220 emit a plurality of infrared rays in parallel to a surface of the display 220. The infrared rays are reflected by a reflector surrounding the sides of the display 220, and light receiving elements receives light returning along the same optical path as an optical path of the emitted infrared rays.

The touch sensor 216 outputs position information of the infrared rays that are blocked by an object after being emitted from the two light receiving and emitting devices, to the touch sensor controller 215. Based on the position information of the infrared rays, the touch sensor controller 215 detects a specific coordinate that is touched by the object. The touch sensor controller 215 further includes a communication unit 215a for wireless communication with the pen 2500. For example, when communication is performed in compliance with a standard such as Bluetooth^{®}, a commercially available pen can be used. If one or more pens 2500 are registered in the communication unit 215a in advance, the display apparatus 2 and the pen 2500 communicates with each other without the user's manual operation of configuring connection settings

The power switch 227 turns on or off the power of the display apparatus 2. The tilt sensor 217 detects the tilt angle of the display apparatus 2. The tilt sensor 217 is mainly used to detect whether the display apparatus 2 is being used in any of the states in FIG. 2A, 2B, or 2C. For example, the display apparatus 2 automatically changes the thickness of characters or the like depending on the detected state.

The serial interface 218 is a communication interface to connect the display apparatus 2 to extraneous sources such as a universal serial bus (USB).

The serial interface 218 is used to input information from extraneous sources. The speaker 219 is used to output sound. The microphone 221 is used to input sound. The wireless communication device 222 communicates with a terminal carried by the user and relays connection to the Internet, for example. The wireless communication device 222 performs communication in compliance with, for example, Wi-Fi or Bluetooth^{®}. Any suitable standard can be applied other than the Wi-Fi and Bluetooth^{®}. The wireless communication device 222 forms an access point. When a user sets a service set identifier (SSID) and a password that the user obtains in advance in the terminal carried by the user, the terminal is connected to the access point.

It is preferable that two access points are provided for the wireless communication device 222 as follows:
(a) Access point to the Internet; and (b) Access point to Intra-company network to the Internet. The access point of (a) is for users other than, for example, company staffs. The access point of (a) does not allow access from such users to the intra-company network, but allows access to the Internet. The access point of (b) is for intra-company users and allows such users to access the intra-company network and the Internet.

The infrared I/F 223 detects another display apparatus 2 provided adjacent to the display apparatus 2. The infrared I/F 223 detects the adjacent display apparatus 2 using the straightness of infrared rays. Preferably, one infrared I/F 223 is provided on each side of the display apparatus 2. This configuration allows the display apparatus 2 to detect a direction in which the another display apparatus 2 is located. Such arrangement extends the screen. Accordingly, the user can instruct the adjacent display apparatus 2 to display a previously hand drafted information. In other words, one display 220 (screen) corresponds to one page, and the adjacent display 220 displays the hand drafted information on a separate page.

The power control circuit 224 controls the AC adapter 225 and the battery 226, which are power supplies of the display apparatus 2. The AC adapter 225 converts alternating current shared by a commercial power supply into direct current.

In a case that the display 220 is a so-called electronic paper, little or no power is consumed to keep an image being displayed, and the display apparatus 2 may be driven by the battery 226, accordingly. This allows the display apparatus 2 to be used as, for example, a digital signage, which is also usable in a place, such as a place in the open air, where a power source is hardly secured.

The display apparatus 2 further includes a bus line 210. The bus line 210 is an address bus or a data bus that electrically connects the elements illustrated in FIG. 3, such as the CPU 201, to each other.

Although the description given above is an example in which the touch sensor 216 adopts the optical sensing, this is merely one example. In another example, the touch sensor 216 uses a capacitance touch panel that identifies a contact position by detecting a change in capacitance. In another example, the touch sensor 216 uses a resistance film touch panel that identifies a contact position by a change in voltage of two opposing resistance films. In another example, the touch sensor 216 uses an electromagnetic induction touch panel that identifies a contact position by detecting electromagnetic induction caused by contact of an object to the display, or may use various sensing devices. The touch sensor 216 can be a type that does not use an electronic pen to detect whether the pen tip is in contact with the surface of the display 220. In this case, a fingertip or a pen-shaped stick is used for touch operation. In addition, the pen 2500 may have any suitable shape other than a slim pen shape.

### Functions

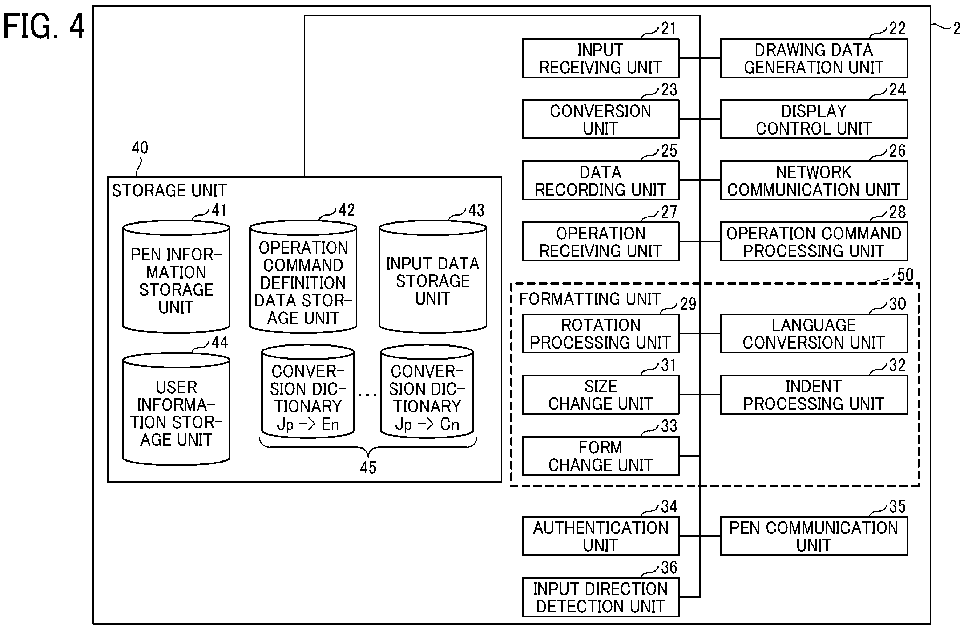

Referring to FIG. 4, a functional configuration of the display apparatus 2 is described according to the present embodiment. FIG. 4 is a block diagram illustrating an example of the functional configuration of the display apparatus 2 according to the present embodiment. The display apparatus 2 includes an input receiving unit 21, a drawing data generation unit 22, a conversion unit 23, a display control unit 24, a data recording unit 25, a network communication unit 26, an operation receiving unit 27, an operation command processing unit 28, a rotation processing unit 29, a language conversion unit 30, a size change unit 31, an indent processing unit 32, a form change unit 33, an authentication unit 34, a pen communication unit 35, and an input direction detection unit 36. These functional units of the display apparatus 2 are implemented by or are caused to function by operation of any of the components illustrated in FIG. 3 according to an instruction from the CPU 201 according to a program loaded from the SSD 204 to the RAM 203.

The input receiving unit 21 detects coordinates of a position where the pen 2500 touches with respect to the touch sensor 216. The drawing data generation unit 22 acquires coordinates of each position touched by the pen tip of the pen 2500 from the input receiving unit 21. The input receiving unit 21 connects a plurality of contact coordinates into a sequence of coordinate points by interpolation, to generate stroke data.

The conversion unit 23 performs character recognition processing on one or more pieces of stroke data (hand drafted data) input by a user, according to a display language associated with the user or the pen 2500 used by the user, to convert the stroke data into text (one or more character codes). The conversion unit 23 recognizes characters (of multilingual languages such as English as well as Japanese), numbers, symbols (e.g., %, $, and &), shapes (e.g., lines, circles, and triangles) concurrently with a pen operation by the user. Although various algorithms have been proposed for the recognition method, a detailed description is omitted on the assumption that known techniques can be used in the present embodiment.

The display control unit 24 displays, on a display, hand drafted data, a character string converted from the hand drafted data, and an operation menu to be operated by the user. The data recording unit 25 stores hand drafted data input on the display apparatus 2, converted text, a screenshot on a personal computer (PC) screen, a file, and the like in a storage unit 40. The network communication unit 26 connects to a network such as a local area network (LAN), and transmits and receives data to and from other devices via the network.

The operation command processing unit 28 detects whether text recognized by the conversion unit 23 corresponds to an operation command, and executes the detected operation command when the user presses the displayed operation command.

The rotation processing unit 29 rotates text or hand drafted data according to an operation command or a user operation, to adjust display directions of the text or the hand drafted data. The rotation processing unit 29 is one function of a formatting unit 50.

The language conversion unit 30 converts language of displayed text into a display language associated with the user or the pen 2500 used by the user. In other words, the language conversion unit 30 performs translation. The predetermined language is, for example, Japanese or English, and is determined according to the user or the pen 2500 used by the user. The language conversion unit 30 is one function of the formatting unit 50.

The size change unit 31 adjusts the size of displayed text or hand drafted data to a predetermined size. For example, the size change unit 31 changes the size of text input by another user to the size of text input by a user who instructs formatting. In a case that the user who instructs formatting has input multiple pieces of text, the size change unit 31 adjusts the sizes of multiple pieces of text, for example, to an average size of the multiple pieces of text, a maximum value among the sizes of the multiple pieces of text, or a minimum value among the sizes of the multiple pieces of text. In another example, the size change unit 31 adjusts the sizes of the multiple pieces of text to a size set by the user. The size change unit 31 is one function of the formatting unit 50.

The indent processing unit 32 adjusts the indents of displayed text or hand drafted data. For example, the indent processing unit 32 aligns the left ends or the right ends, or the centers of the text or hand drafted data. The indent processing unit 32 is one function of the formatting unit 50.

The form change unit 33 adjusts the form (e.g., font, color, line type, or line thickness) of displayed text or hand drafted data. The form change unit 33 is one function of the formatting unit 50.

The authentication unit 34 authenticates a user on the basis of authentication information input by the user. When the authentication is successful, a user ID is identified. Thus, an attribute value determination unit 37 acquires an attribute value associated with the user ID from a user information storage unit 44.

The pen communication unit 35 controls the communication unit 215a to receive the pen ID from the pen 2500. The pen 2500 transmits the pen ID at least once when a tip thereof is pressed against the display. With this configuration, the display apparatus 2 identifies the pen 2500 with which hand drafted data is input.

The input direction detection unit 36 detects a display direction that faces a user who inputs hand drafted data on the basis of the hand drafted data. Alternatively, the input direction detection unit 36 detects the display direction facing the user who inputs hand drafted data using the input device or the input means, according to hand drafted data input in a predetermined method.

The display apparatus 2 further includes the storage unit 40 implemented by, for example, the SSD 204 or the RAM 203 illustrated in FIG. 3. In the storage unit 40, a pen information storage unit 41, an operation command definition data storage unit 42, an input data storage unit 43, the user information storage unit 44, and conversion dictionaries 45 are constructed.

**Table 1**

| PenID | Display Direction | Size | Indent | Form | Display Language |
|---|---|---|---|---|---|
| 1 | 0° | 50 | Left end | Font = Meiryo | Japanese |
| 2 | 180° | 25 | Right end | Font = Century | English |
| 3 | 0° | 50 | Left end | Font = Meiryo | Japanese |

Table 1 describes an example of pen information set in the pen information storage unit 41. The pen information includes attribute values of attributes of a display direction, a size, an indent, a form, and a display language associated with the pen ID.

The pen ID is identification information identifying the pen 2500. Each pen 2500 is assigned with a pen ID in advance.

The display direction is determined as the 90-degree direction, the 180-degree direction, and the 270-degree direction counterclockwise from a reference display direction, which is the 0-degree direction. The display direction indicates a location where a user operating the pen 2500 is present. When an object is displayed in the display direction, the object faces the user using the pen 2500.

The size may be used as the number of points of text for formatting.

The indent indicates where to an object is aligned from among the head, the center, and the end when the object input by the associated pen is formatted.

The form is an initial value of a form of text that is input with the associated pen. The form includes, for example, a color, a line type, and a line thickness, in addition to the font.

The display language is a language in which the conversion unit 23 recognizes a character from hand drafted data. Further, the display language is a language of character string candidate displayed on an operation guide described below.

**Table 2**

| Recognized character string | Command name | Processes |
|---|---|---|
| 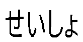 | 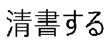 | A. Adjust to the size of an object that is input by the operation user |
| 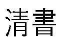 | | B. Adjust objects to a direction facing the operation user |
| 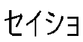 | | C. Adjust (the head, the end, or the center) of objects |
| | | D. Adjust forms of objects |
| | | E. Adjust languages of objects |
| ... | ... | ... |

Table 2 schematically describes operation command definition data stored in the operation command definition data storage unit 42. The operation command definition data defines an operation command for a user to instruct the display apparatus 2 in association with a recognized character string obtained by character recognition.

For example, when a character strings " 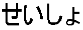 ," (Japanese hiragana character, pronounced as "seisho" and meaning "formatting") , " 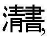 " (Japanese kanji character, pronounced as "seisho" and meaning "formatting"), or " 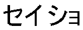 " (Japanese katakana character, pronounced as "seisho" and meaning "formatting") is recognized from the hand drafted data, the corresponding operation command is " 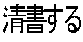 " (Japanese kanji and hiragana characters, pronounced as "seisho-suru" and meaning "perform formatting"). The display apparatus 2 displays the operation command and receives an operation from the user. When the operation command is selected, the operation command processing unit 28 executes the formatting described in an item "processing." Specifically, the operation command processing unit 28 executes processes A to E described in the item "processing." Among the processes A to E, a process set in advance by the user or a process selected as desired by the user is executed. In another example, multiple processes from among the processes A to E are executed consecutively. The processes A to E correspond to adjust the attribute values of multiple objects to format an object.

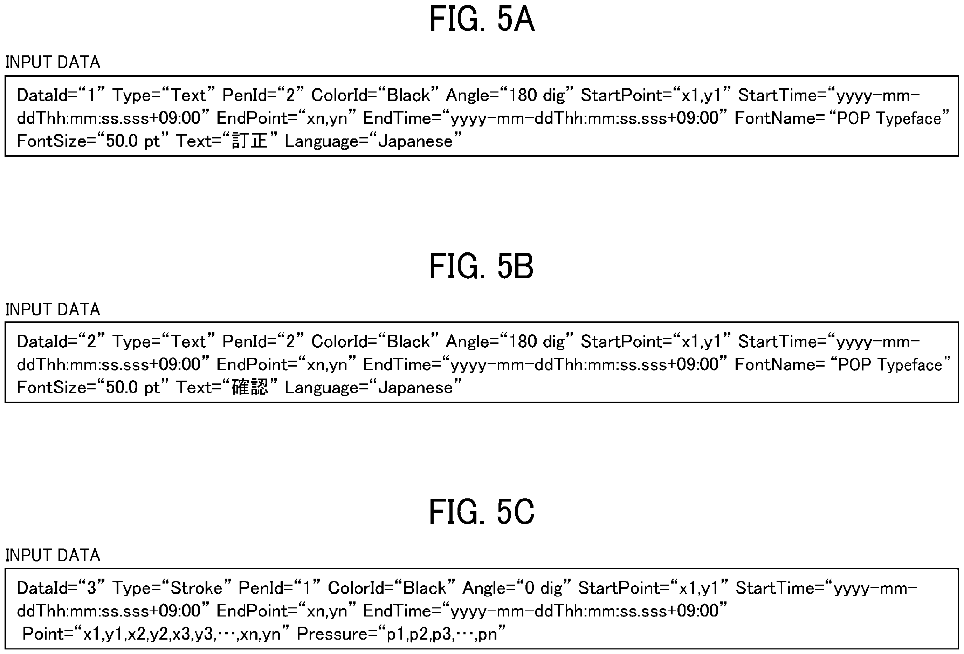

FIG. 5A to FIG. 5C schematically illustrate content of the input data storage unit 43. The input data indicates attributes of data input by a user. The input data is recorded for each object (e.g., one stroke data, one text, or one image). When an object is hand drafted data having multiple pieces of stroke data, one piece of hand drafted data is determined on the basis of a distance between the multiple pieces of stroke data or an interval between times when the multiple pieces of stroke data are input. FIG. 5A to FIG. 5C illustrate input data of three objects respectively. Since attributes held by the input data slightly differs depending on a type attribute, the input data of FIG. 5A and FIG. 5B are described first.

"DataId" is identification information identifying the input data.

"Type" is the type of input data and includes stroke, text, and image. Type = "Text" indicates text (character code).

"PenId" is a pen ID identifying the pen 2500 used to input the text.

"ColorId" is the color of the text.

"Angle" is a display direction of the text.

"StartPoint" is coordinates of the upper left apex of the circumscribed rectangle of the text.

"StartTime" is the time when a user starts writing the text.

"EndPoint" is coordinates of the lower right apex of the circumscribed rectangle of the text.

"EndTime" is the time when the user finishes writing the text.

"FontName" is a font name of the text.

"FontSize" is a size (number of points) of the text.

"Text" is an input text (character code).

"Language" is a language of the text. In the present embodiment, a display language used for conversion into text is set.

Regarding the input data of FIG. 5C, differences from the input data of FIG. 5A and FIG. 5B are described. FIG. 5C illustrates the input data (hand drafted data) in which Type = "Stroke". Since the input data is hand drafted data, the input data in FIG. 5C does not include "FontName," "FontSize," "Text," and "Language."

"Point" is a sequence of coordinate points of stroke data.

"Pressure" is a writing pressure (e.g., strength with which the pen 2500 is gripped).

**Table 3**

| User ID | Password | Display Direction | Size | Indent | Form | Display Language |
|---|---|---|---|---|---|---|
| 1 | ^{∗∗∗∗} | 0° | 50 | Left end | Font = Meiryo | Japanese |
| 2 | ^{∗∗∗∗} | 180° | 40 | Right end | Font = Meiryo | English |
| ... | ... | ... | ... | ... | ... | ... |

Table 3 schematically describes an example of content of the user information storage unit 44. User information is information relating to each user of the display apparatus 2 and has attribute values that are set in advance for each user.

The attribute values of the user information storage unit 44 enable display of an object on the basis of the attribute values even when the user is not using the pen 2500. Accordingly, when the user is using the pen 2500, the attribute values of Table 1 are used.

"User ID" is identification information identifying a user.

"Password" is confidential information used for user authentication.

"Display direction" is a direction in which an object faces the associated user. Since a position from which the user starts hand draft input, the display direction is dynamically set after the user finishes the hand draft input.

"Size," "indent," "form," and "display language" are attribute values that are set in advance for the user. For example, the display language is a language that the user primarily uses. The native language is typically used as the display language. Two or more display languages may be used.

The user ID and the password are authentication information used when the user logs into the display apparatus 2. Other examples of the authentication information include a personal identification (PIN) number of an integrated circuit (IC) card and biometric authentication information. In another example, the authentication information is handwriting.

### Formatting by Operation Command

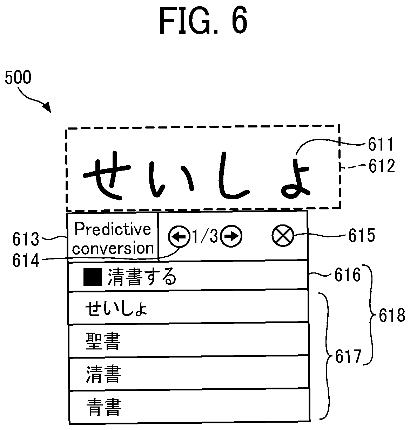

A description is now given of an operation guide 500 displayed at the time of converting hand drafted data, with reference to FIG. 6. FIG. 6 illustrates an example of the operation guide 500 and selectable candidates 618 displayed by the operation guide 500. The operation guide 500 is displayed after the elapse of a predetermined time from a pen-up after a user inputs a hand drafted data 611. The "pen-up" corresponds to disengaging the writing mode for inputting a stroke. The operation guide 500 displays an operation command candidate 616 and character string candidates 617. The character string candidates 617 includes a result of recognizing the hand drafted data, a result of kana-kanji conversion, and predictive conversion.

The hand drafted data 611 in FIG. 6 is a character " 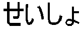 " (Japanese hiragana character, pronounced as "seisho") handwritten by the user. A rectangular hand drafted data area enclosure 612 enclosing the hand drafted data 611 is displayed. In the example illustrated in FIG. 6, the operation guide 500 is displayed in response to input of four characters, but the time of display thereof is not limited thereto. The operation guide 500 is displayed in response to suspension of hand draft input by the user. Accordingly, the number of characters in the hand drafted data 611 is any number.

The operation command candidate 616 is a predefined operation command candidate (command such as file operation or text editing) displayed according to the recognized text. In the example of FIG. 6, the line head character "■" is an indication of the operation command candidate. In the example in FIG. 6, " 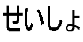 " (Japanese hiragana character, pronounced as "seisho" and meaning "formatting") and " 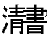 " (Japanese kanji character, pronounced as "seisho" and meaning "formatting") from among the character string candidates 617 matches (may be partially match) the command definition data of Table 2. Accordingly, the operation command candidate 616 is displayed. The description given above is of an example in which the user handwrites " 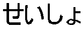 " (Japanese hiragana character, pronounced as "seisho" and meaning "formatting"). In another example, a user handwrites "for," and the operation command candidate 616 relating to formatting indicated by "perform formatting" is displayed, which is one of the displayed character string candidates 617 including "form," "formatting," "for," and "formulation," for example. In this case, the command definition data of Table 2 includes "formatting" as the recognized character string and "perform formatting" as the command name.

The operation command candidate 616 is displayed when the operation command definition data including text converted by character recognition is found and is not displayed in the case of no-match. In the present embodiment, as illustrated in FIG. 6, a formatting command, which is a command relating to formatting, is displayed as the operation command candidate 616. In response to selection of the formatting command, the display apparatus 2 formats multiple objects by adjusting the attribute values of the multiple objects.

The operation guide 500 includes a button 613, a button 614, and a button 615. The button 613 is a graphical representation for receiving an operation of switching between predictive conversion and kana conversion. The button 614 is a graphical representation for receiving page operation of the candidate display.

In the example illustrated in FIG. 6, there are three candidate display pages, and the first page is currently displayed. The button 615 is a graphical representation for receiving closing of the operation guide 500. When the operation receiving unit 27 receives pressing of the button 615 by the user, the display control unit 24 erases the displayed objects other than the hand drafted data.

### Formatting by Format Icon

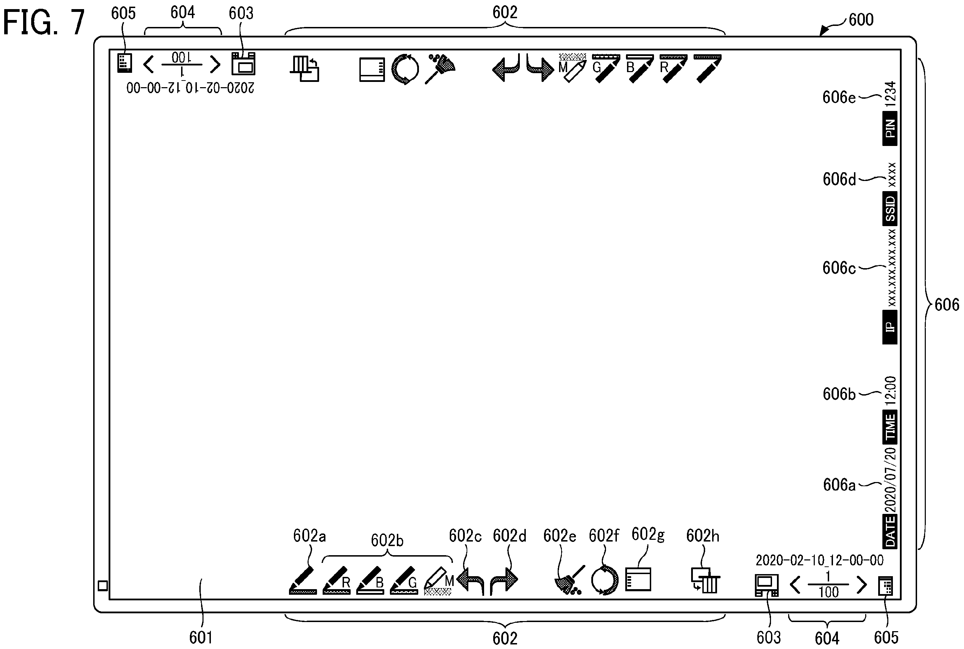

As illustrated in FIG. 7, the user can instruct formatting of an object by pressing a format icon, in addition to using the operation command. FIG. 7 illustrates an example of an input screen including the format icon, which is an icon to be selected for formatting objects. The input screen 600 includes a hand drafted input area 601, menu buttons 602, a zoom/pan window display 603, a page number display 604, a page navigation display 605, and information display area 606.

The hand drafted input area 601 is an area in which the user performs hand drafted input with the pen 2500 as desired. The hand drafted data is automatically converted into text. In another example, the hand drafted data is converted into text according to a user's operation.

The menu buttons 602 displays icons selectable by the user, such as a hand drafted data line type 602a, a line color 602b, a cancel 602c, a redo 602d, a ghost removal 602e, a format icon 602f, a hand drafted input recognition 602g, and a delete 602h.

The hand drafted data line type 602a is an icon that receives a change in a line type (e.g., thickness, solid line, and dotted line) of a line of hand drafted data.

The line color 602b is an icon that receives a change in the color of the hand drafted data. Since monochrome representation is typical for electronic paper, differences in color are represented by line types.

The cancel 602c is an icon that receives cancellation of the most recent input operation.

The redo 602d is an icon that receives an operation to do a canceled operation again.

The ghost removal 602e is an icon that receives an operation to initialize an entire screen and redisplay data displayed before the ghost removal 602e is pressed in order to erase ghosts (residual traces of gray displayed data that cannot be completely erased) that occurs in electronic paper.

The format icon 602f is an icon that receives an operation to format an object by adjusting attribute values of multiple objects.

The hand drafted input recognition 602g is an icon that receives character recognition for hand drafted data.

The delete 602h is an icon that receives an operation to delete (move to trash) a currently displayed page or a part of the currently displayed page.

The zoom/pan window display 603 is an icon that receives an operation to zoom (enlarge) or pan (reduce) the hand drafted input area.

The page number display 604 indicates the page number of the current hand drafted data.

The page navigation display 605 is a button that, when selected, causes the display apparatus to display a thumbnail of each page at the right end of the hand drafted input area.

The information display area 606 is an area that displays, for example, a today's date 606a, a time 606b, an Internet protocol (IP) address 606c, a SSID 606d, and a PIN 606e. The IP address 606c are an IP address that allows another display apparatus, a PC, a smartphone, or the like to connect to the display apparatus 2. The SSID 606d is an identifier of an access point provided by the display apparatus 2. The PIN 606e is an encryption key (password) that allows another display apparatus, a PC, a smartphone, or the like to connect to the access point. In another example, the PIN 606e is displayed other than the encryption key (password). Providing the PIN that is different from the encryption key enhances security.

The user enters the IP address 606c to a web browser operating on another display apparatus, a PC, a smartphone, or the like. Further, the user communicates the IP addresses 606c to a user at a remote location, and thus a remote conference with another display apparatus 2 or an expanded display with the adjacent display apparatus 2 is performed.

The menu buttons 602, the other buttons, and the icons are displayable on each side of the display apparatus 2. In FIG. 7, the menu buttons 602, the other buttons, and the icons are also displayed on the upper side. A user who is present close to either the upper side or the bottom side and inputs hand drafted data can press the menu buttons 602 closer to the user. The menu buttons 602 do not have to be constantly displayed. In another example, the menu buttons 602 are displayed in response to an operation by the user.

In the following description, performing formatting by execution of the operation command and performing formatting by selection of the format icon 602f may be referred to simply as "a user instructs formatting" unless they need to be distinguished from each other. Although in the present embodiment, a description is given of an example in which formatting of an object is performed in a manner as described with reference to FIG. 6 and FIG. 7, in another example, formatting of an object may be automatically performed. For example, when no input is detected for a predetermined time period after immediately after an object is input to the display apparatus 2, the display apparatus 2 may automatically perform formatting.

### Example of Display Direction

In the present embodiment, although the display direction may be set to the pen 2500 in advance as described with reference to Table 1, a description is now given of a method in which a user associates the pen with the display direction. This method is also applicable to a case in which the user makes an input with his/her finger instead of the pen 2500.

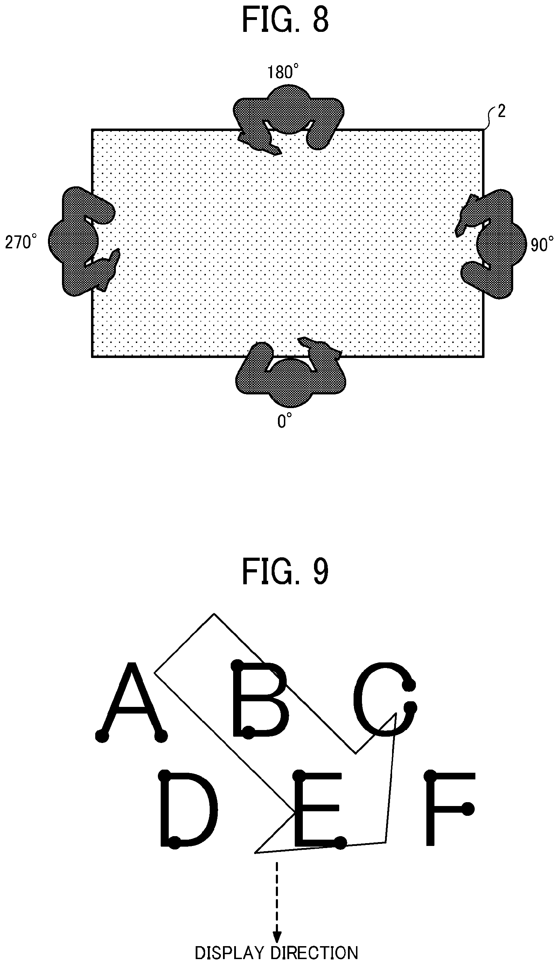

FIG. 8 is a diagram for describing a display direction. In the present embodiment, a direction perpendicular to a predetermined side from the center of the display is 0 degree. Further, the display directions that face respective users on other sides of the display are 90 degrees, 180 degrees, and 270 degrees counterclockwise, respectively.

The display apparatus 2 determines in which direction (on which of the four sides) the user who is inputting hand drafted data is present in several methods. As one of the several methods, the input direction detection unit 36 determines in which direction (on which of the four sides) the user is present on the basis of the direction of hand drafted input by the user.

FIG. 9 is a diagram schematically illustrating the correspondence between the user's hand drafted input direction and the display direction. For example, in a case that the coordinates of stroke data move from left to right and from top to bottom (horizontal writing from left to right), the display direction corresponds to the side present from top to bottom direction. In FIG. 9, the start point and the end point of each character are indicated by black circles, and the characters as a whole move from the upper left to the lower right.

In substantially the same manner, in a case that the coordinates of the stroke data move from top to bottom and from right to left (vertical writing from top to bottom), the display direction corresponds to the side present from top to bottom direction. In this way, the input direction detection unit 36 estimates in which direction (on which of the four sides) the user is present on the basis of the hand drafted data.

In another example, the manufacturer of the display apparatus 2 generates the correspondence between the coordinates of the hand drafted data and the display direction through machine learning. For example, a person in charge inputs time-series stroke data to a neural network and gives the display direction as training data, so that the input direction detection unit 36 is obtained as a learning model.

Although FIG. 8 illustrates an example in which four display directions of 0 degree, 90 degrees, 180 degrees, and 270 degrees are provided, in another example, the display direction may be set more finely. For example, the display direction may be set at intervals of 45 or 30 degrees.

As another example of the several methods, the input direction detection unit 36 determines in which direction (on which of the four sides) the user is present on the basis of the position of hand drafted input by the user.

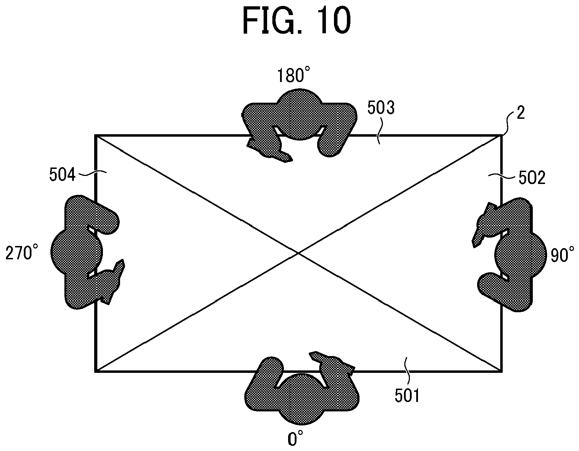

FIG. 10 is a diagram schematically illustrating the correspondence between the position of the user's hand drafted input direction and the display direction. In this method, the display of the display apparatus 2 is divided into four areas in advance. The display direction of an object that is input in an area 501 is determined as 0 degree. The display direction of an object that is input to an area 502 is determined as 90 degrees. The display direction of an object that is input in an area 503 is determined as 180 degrees. The display direction of an object that is input in an area 504 is 270 degrees.

In a case that the user is using the pen 2500 when the display direction is determined by the methods described with reference to FIG. 9 and FIG. 10, the pen and the display direction are associated with each other as described in Table 1. The display direction is set to input data of an object that is input after the pen and the display direction are associated with each other. In a case that the user is using his or her finger when the display direction is determined by the methods described with reference to FIG. 9 and FIG. 10, the user and the display direction are associated with each other as described in Table 3 in response to the user's login. The display direction determined by the methods described with reference to FIG. 9 and FIG. 10 is set to input data of an object.

### Example of Formatting

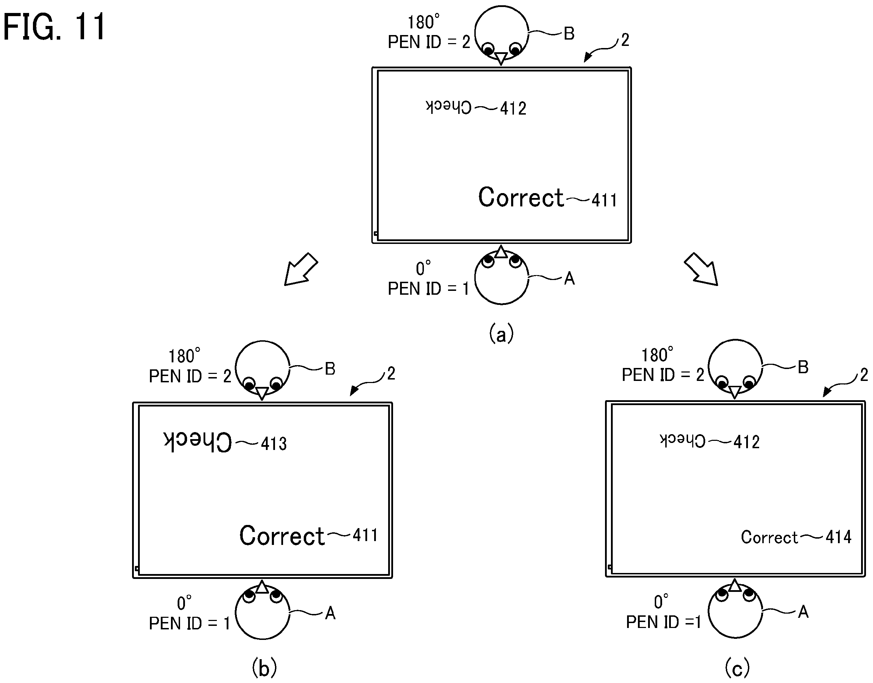

The description is now given of an example of formatting an object by adjusting multiple objects, with reference to FIG. 11 to FIG. 17.

### Change of Size

FIG. 11 illustrates an example of formatting of an object on the basis of the size of the object. It is assumed that the display direction of User A is 0 degree and the display direction of User B is 180 degrees. These display directions are determined on the basis of the pen being used or a result of estimating in which direction (on which of the four sides) the user is present. In either case, the input data includes the display direction.

Illustration (a) of FIG. 11 indicates that User A inputs text 411 "Correct", and User B inputs text 412 "Check". The display direction of the text 411 "Correct" is 0 degree and the display direction of the text 412 "Check" is 180 degrees. For the sake of explanatory convenience, it is assumed that the size of the text 411 "Correct" is 50 points and the size of the text 412 "Check" is 25 points. Further, it is assumed that the pen ID of User A is 1, and the pen ID of User B is 2.

When User A or User B instructs formatting of these objects, the size change unit 31 changes the size of at least one of the text 411 "Correct" and the text 412 "Check".

In a case that User A instructs formatting of the object, the size change unit 31 detects the pen ID of the pen 2500 used by User A. The detected pen ID is 1. The size change unit 31 acquires, from the input data storage unit 43, the input data in which PenId="1" is set, to acquire the size (50 points) of the text. The size change unit 31 acquires, from the input data storage unit 43, the input data in which PenId="1" is not set and changes the size to 50 points. As a result, as indicted by Illustration (b) of FIG. 11, the sizes of the text 411 "Correct" and the text 413 "Check" are adjusted to 50 points.

In a case that User B instructs formatting of an object, the size change unit 31 detects the pen ID of the pen 2500 used by User B. The detected pen ID is 2. The size change unit 31 acquires, from the input data storage unit 43, the input data in which PenId="2" is set, to acquire the size (25 points) of the text. The size change unit 31 acquires, from the input data storage unit 43, the input data in which PenId="2" is not set and changes the size to 25 points. As a result, as indicted by Illustration (c) of FIG. 11, the sizes of the text 414 "Correct" and the text 412 "Check" are adjusted to 25 points.

Although the description given above is of an example in which the size is adjusted to the size of the input data having the pen ID of the pen 2500 used by the user who instructs formatting, in another example, the size change unit 31 may adjust the size of the object to the size associated with the pen ID of the pen 2500 used by the user.

In another example, the size change unit 31 may change the size to, for example, an average value of 50 points and 25 points instead of adjusting the size to either one of 50 points or 25 points. In this case, the size of each text is changed.

When User A is not using the pen 2500, the display direction (0 degree) of a user who instructs formatting is determined by the method described with reference to FIG. 9 and FIG. 10. In this case, the size change unit 31 acquires, from the input data storage unit 43, the input data in which 0 degree is set to the display direction, to acquire the size (50 points) of the text. The size change unit 31 acquires, from the input data storage unit 43, the input data in which a degree other than 0 degree is set to the display direction and changes the size to 50 points. As a result, as indicted by Illustration (b) of FIG. 11, the sizes of the text 411 "Correct" and the text 412 "Check" are adjusted to 50 points. In a case that User B is not using the pen 2500, the sizes of text are adjusted in the same or substantially the same manner as in the case where User A is not using the pen.

Also in this case, the size change unit 31 may adjust the sizes of the text to the size associated with the user in the user information storage unit 44.

Although in Illustration (a) of FIG. 11, User A and User B respectively input one text, there is a case where User A or User B input multiple pieces of text having different sizes. In this case, the size change unit 31 changes the size of the text input by User B to the average value, the maximum value, the minimum value, or the median value of the sizes of the multiple pieces of text that are input by User A. Further, the size change unit 31 may change the sizes of multiple pieces of text that are input by User B to an average value, a maximum value, a minimum value, or a median value of the sizes of the multiple pieces of text that are input by User A.

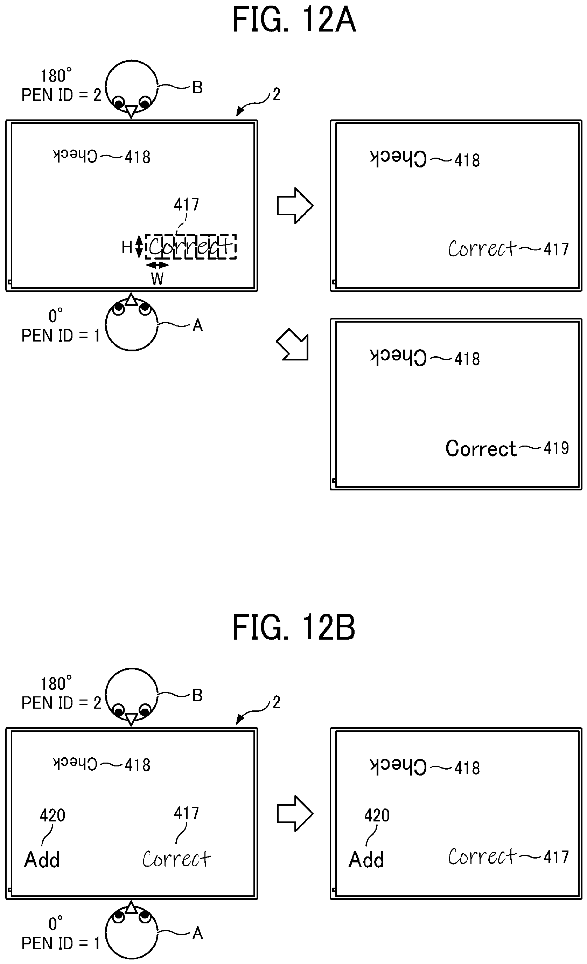

A description is now given of a case where an object to be formatted is not text, with reference to FIG. 12A. The case where an object to be formatted is not text is, for example, a case where the text of Illustration (a) of FIG. 11 is hand drafted data. FIG. 12A illustrates an example of formatting an object when one or more of multiple objects is hand drafted data. In the following, a case where User A instructs formatting of the objects is described. The size change unit 31 detects the size of a hand drafted data 417 that is input by User A. The size change unit 31 divides the hand drafted data 417 into individual characters by using a distance between strokes and calculates, for example, averages of the heights H and the widths W of the characters. The size change unit 31 converts the height H and the width W into points, and changes the size of text that is input by User B to a size corresponding to the points. Thus, the size change unit 31 adjust the size of text 418 "Check" and the size of the hand drafted data 417 "Correct" to the same size (as indicated by the upper illustration in FIG. 12A).

In one example, in a case that the object displayed after formatting includes hand drafted data, the conversion unit 23 may automatically perform character recognition and convert the hand drafted data into text. The user may set in advance whether the conversion unit 23 converts hand drafted data into text. When the user A instructs formatting of an object, the conversion unit 23 converts the hand drafted data 417 "Correct" into text 419 (as indicated by the lower right illustration in FIG. 12A). Through the conversion to the text, the number of characters is obtained. Thus, the conversion unit 23 determines the points of one character on the basis of the circumscribed rectangle of the hand drafted data 417. By using thus determined points, when User A instructs formatting of an object, after the hand drafted data 417 "Correct" is converted into the text 419, the size change unit 31 changes the size of "Check" to the same point as the text 419 converted from the hand drafted data 417.

In a case that User B instructs formatting of an object, the text 419 "Correct" is displayed at 25 points, which is same as the number of points of "Check" according to the height H and the width W of the hand drafted data 417 of "Correct" or the conversion result into the text 419. In another example, the drafted data 417 may be reduced in size without being changed to text.

In another example, as illustrated in FIG. 12B, when the hand drafted data 417, the text 418 "Check", and text 420 "Add" are displayed, the size change unit 31 formats only the text. In a case that User A instructs formatting, in FIG. 12B, the size of the text 418 "Check" is changed to the same size as the size of the text 420 "Add". Such processing can be performed by configuring settings for formatting only text in the display apparatus 2 according to a user's operation. Although FIG. 12B illustrates an example in which the size of text is changed, in substantially the same manner, a display direction, a language, an indent, and a form of only text is formatted according to a user's instruction.

### Change of Orientation

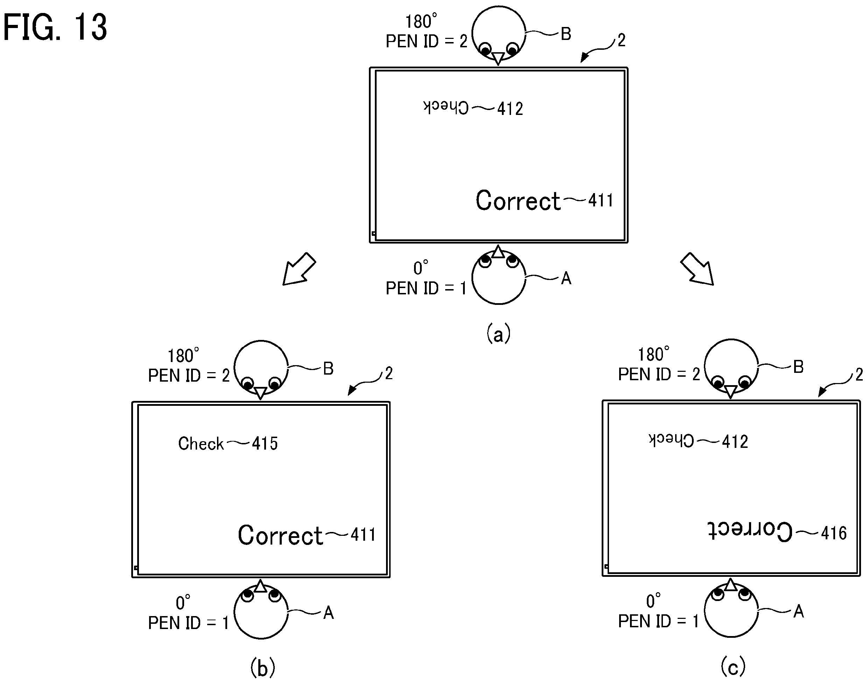

FIG. 13 illustrates an example of formatting of an object on the basis of the orientation of the object. In the following description of the example of FIG. 13, differences from the example of FIG. 11 are described. Illustration (a) of FIG. 13 is the same as Illustration (a) of FIG. 11.

When User A or User B instructs formatting of the objects, the rotation processing unit 29 changes the orientation of the text 411 "Correct" or the text 412 "Check". In other words, the rotation processing unit 29 adjusts the display directions of the objects.

In a case that User A instructs formatting of the object, the rotation processing unit 29 detects the pen ID of the pen 2500 used by User A. The detected pen ID is 1. The rotation processing unit 29 acquires, from the pen information storage unit 41, a display direction associated the pen ID "1." The acquired display direction is 0 degree. The rotation processing unit 29 acquires, from the input data storage unit 43, the input data in which the display direction is other than 0 degree and changes the orientation of text to 0 degree.

For example, text whose display direction is 180 degrees is present, the rotation processing unit 29 rotates the text by 180 degrees. As a result, as indicted by Illustration (b) of FIG. 13, the display directions of the text 411 "Correct" and the text 415 "Check" are adjusted to 0 degree.

In a case that User B instructs formatting of the object, the rotation processing unit 29 detects the pen ID of the pen 2500 used by User B. The detected pen ID is 2. The rotation processing unit 29 acquires, from the pen information storage unit 41, a display direction associated the pen ID "2." The acquired display direction is 180 degrees. The rotation processing unit 29 acquires, from the input data storage unit 43, the input data in which a degree other than 180 degrees is set to the display direction and changes the orientation of the text to 180 degrees. For example, text whose display direction is 0 degree is present, the rotation processing unit 29 rotates the text by 180 degrees. As a result, as indicted by Illustration (c) of FIG. 13, the display directions of the text 416 "Correct" and the text 412 "Check" are adjusted to 180 degrees.

When User A is not using the pen 2500, the display direction (0 degree) of User A, who instructs formatting, is determined by the method described with reference to FIG. 9 and

FIG. 10. In this case, the rotation processing unit 29 acquires, from the input data storage unit 43, the input data in which a degree other than 0 degree is set to the display direction and changes the display direction to 0 degree. As a result, as indicted by Illustration (b) of FIG. 13, the display directions of the text "Correct" and the text "Check" are adjusted to 0 degree. In a case that User B is not using the pen 2500, the display directions of text are adjusted in the same or substantially the same manner as in the case where User A is not using the pen.

Although in Illustration (a) of FIG. 13, User A and User B respectively input one text, there is a case where User A or User B input multiple pieces of text having different display directions. In this case, the rotation processing unit 29 may adjust the display directions of the multiple pieces of text to 0 degree, which is associated with the pen ID "1" of the pen 2500 used by User A. As a simple manner, the rotation processing unit 29 adjust the display directions of all objects to 0 degree.

In another example, in a case that User A instructs formatting, the rotation processing unit 29 changes the display direction of text that is input by User B to the most frequent display direction among the display directions of multiple pieces of text that area input by User A. In a case that User B instructs formatting, the display direction of text that is input by User A is changed in the same or substantially the same manner as in the case where User A instructs formatting.

Further, when an object to be formatted is hand drafted data and the hand drafted data is formatted as hand drafted data, in other words, without being converted to text, the rotation processing unit 29 may rotate strokes of the hand drafted written data in the same or substantially the same manner.

In either case where the user is using the pen 2500 or using his or her finger, the rotation processing unit 29 can adjust the display direction in the same or substantially the same manner as the case of adjusting the display direction of text.

### Change of Indent

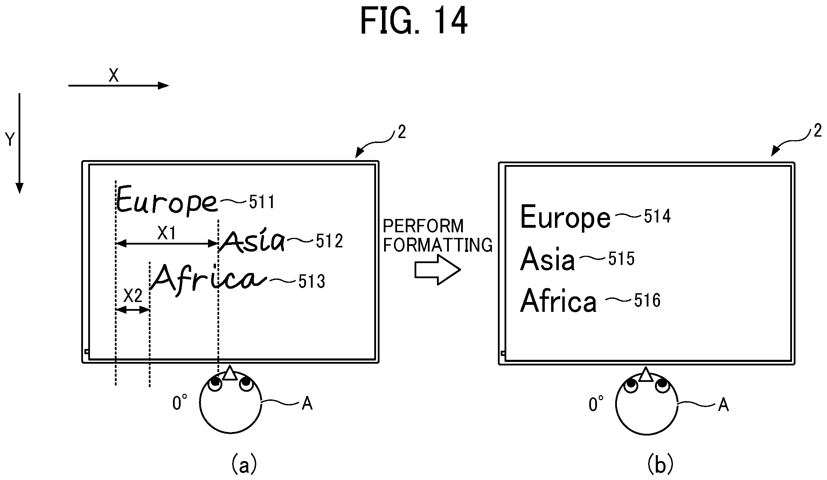

FIG. 14 is a diagram illustrating an example of formatting in which indents of multiple objects are adjusted. Although FIG. 14 illustrates an example in which one user uses the display apparatus, in another example, two or more users may use the display apparatus. In Illustration (a) of FIG. 14, three pieces of hand drafted data, i.e., hand drafted data 511 "Europe", hand drafted data 512 "Asia", and hand drafted data 513 "Africa" are displayed. This illustration is an example in which User A inputs the three hand drafted data. Alternatively, this illustration is an example in which User B inputs at least one of the three hand drafted data, and each hand drafted data input by User B is rotated in a manner as described with reference to Illustration (b) and Illustration (c) of FIG. 13. Objects in Illustration (a) of FIG. 14 may be hand drafted data or text. In the present embodiment, it is assumed that the objects are the hand drafted data 511, the hand drafted data 512, and the hand drafted data 513. Further, it is assumed that an indent is processing of adjusting the left ends. The left direction and the right direction are defined as directions viewed from a user whose display direction is 0 degree.

When User instructs formatting of an object, the conversion unit 23 converts the hand drafted data 511, the hand drafted data 512, and the hand drafted data513 into text 514, text 515, and text 516, respectively. Further, the indent processing unit 32 identifies, for example, hand drafted data whose head is closest to the left end of the display apparatus among the three pieces of hand drafted data, i.e., the hand drafted data 511, the hand drafted data 512, and the hand drafted data 513. In Illustration (a) of FIG. 14, the hand drafted data 511 is an object whose head is closest to the left end of the display apparatus.

The indent processing unit 32 calculates a difference X1 between the left end of the hand drafted data 511 and the left end of the hand drafted data 512, and a difference X2 between the left end of the hand drafted data 511 and the left end of the hand drafted data 513. Further, the indent processing unit 32 decreases the X coordinate of the text 515 by the difference X1, and the indent processing unit 32 decreases the X coordinate of the text 516 by the difference X2.

Thus, as illustrated in Illustration (b) of FIG. 14, the heads of the three pieces of text, i.e., the text 514, the text 515, and the text 516 are aligned at the left end of the text 514.

Although Illustration (b) of FIG. 14 is an example in which the hand drafted data is converted to text, in another example, the indent processing is performed as the hand drafted data 511, the hand drafted data 512, and the hand drafted data 513 remains as hand drafted data, in other words, without being converted to the text. In a case that indent processing unit 32 performs the indent processing on the hand drafted data 511, the hand drafted data 512, the hand drafted data 513 without the conversion to text, the indent processing unit 32 simply decreases the X coordinate of the hand drafted data 512 by the difference X1 and decreases the X coordinate of the hand drafted data 513 by the difference X2.

Alternatively, the indent processing unit 32 may align the ends of the text 514, the text 515, and the text 516 with the rightmost text. In another example, the indent processing unit 32 may adjust the centers of the text 514, the text 515, and the text 516. In the case of adjusting the centers of the multiple pieces of text, the indent processing unit 32 aligns the centers of the text 515 and the text 516 with the center of the text 514, which is the uppermost tex.

The user uses the operation command to select whether the indent processing unit 32 adjusts the left end, the right end, or the center of the text 514, the text 515, and the text 516. For example, in response to the user's hand drafted input "indent," "indent (left end)," "indent (right end)," and "indent (center)" are displayed in the operation command. This allows the user to select which of the left end, the right end, and the center, the text 514, the text 515, and the text 516 are to be adjusted.

The description given above with reference to FIG. 14 is of an example in which, the indent positions of the text 515 and the text 516 are determined on the basis of the indent position of the hand drafted data 511. In another example, the indent processing unit 32 may simply moves the text 514, the text 515, and the text 516 to the left edge or the right edge of the display 220. In another example, in substantially the same manner, the indent processing unit 32 may display the text 514, the text 515, and the text 516 such that the centers thereof are aligned with the center of the display 220.

Even when User A is not using the pen 2500, the indent processing unit 32 can perform the indent processing in substantially the same manner because the pen ID is not used in the processing described with reference FIG. 14.

### Change of Form

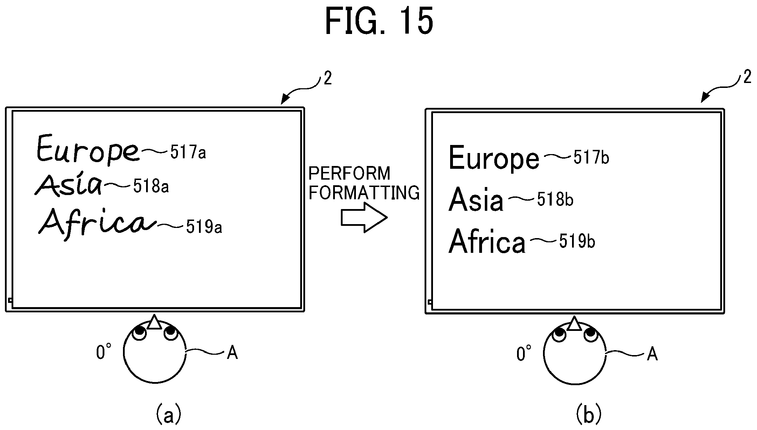

FIG. 15 illustrates an example of formatting in which forms of multiple objects are adjusted. Although FIG. 15 illustrates an example in which one user uses the display apparatus, in another example, two or more users may use the display apparatus. In Illustration (a) of FIG. 15, three pieces hand drafted data, i.e., hand drafted data 517a "Europe", hand drafted data 518a "Asia", and hand drafted data 519a "Europe" are displayed. For example, the hand drafted data 517a "Europe", hand drafted data 518a "Asia", and hand drafted data 519a "Europe" are input by User A alone. In another example, User B inputs at least one of the three pieces of hand drafted data, and each hand drafted data input by User B is rotated in a manner as described with reference to Illustration (b) and Illustration (c) of FIG. 13 and indented as described with reference to FIG. 14.

In a case that User A instructs formatting of the object, the form change unit 33 detects the pen ID of the pen 2500 used by User A. The detected pen ID is 1. The form change unit 33 acquires, from the input data storage unit 43, the input data in which PenId="1" is set, to acquire a form such as a font, color, a line thickness, or line type.

In the present embodiment, a case is described in which fonts are adjusted. Alternatively, the form change unit 33 acquires the form (font) associated with the pen ID "1" from the pen information storage unit 41.

In a case that an object to be formatted is hand drafted data, no font is set. In this case, the form change unit 33 may acquire the font associated with the pen ID "1" from the pen information storage unit 41.

The conversion unit 23 acquires all pieces of hand drafted data in the page from the input data storage unit 43 and converts each acquired hand drafted data into text. The form change unit 33 displays the converted text in the font set in the input data in which PenId="1" is set or the font acquired from the pen information storage unit 41. Thus, the three pieces of text, i.e., text 517b, text 518b, and text 519b are displayed in the same font as illustrated in Illustration (b) of FIG. 15.

When the form change unit 33 changes the forms of the hand drafted data 517a, the hand drafted data 518a, and the hand drafted data 519a as hand drafted data, in other words, without the conversion to text, the form change unit 33 adjusts the hand drafted data 517a, the hand drafted data 518a, and the hand drafted data 519a to have the form such as color or a line type other than font of the input data in which PenId=1 is set or the form such as color or a line type other than font acquired from the pen information storage unit 41.

In a case that User A is not using the pen 2500, the three pieces of text, i.e., the text 517b, the text 518b, and the text 519b are formatted on the basis of a form associated with the user ID identified by the authentication unit 34.

### Change of Language

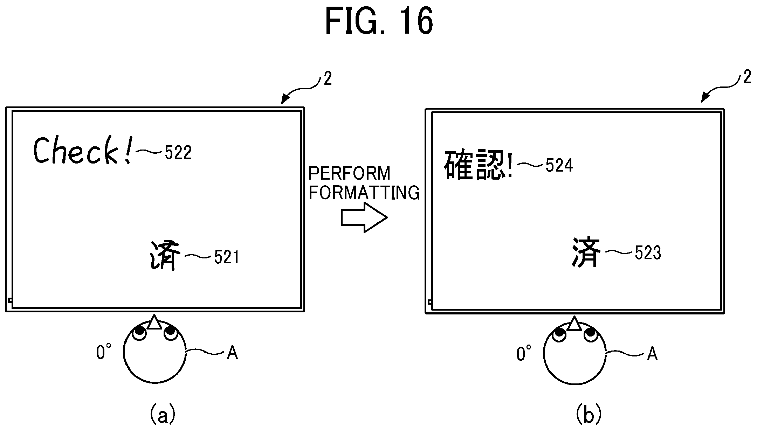

FIG. 16 illustrates an example of formatting of an object on the basis of a language of the object. Although FIG. 16 illustrates an example in which one user uses the display apparatus, in another example, two or more users may use the display apparatus. In Illustration (a) of FIG. 16, two pieces of hand drafted data "Check!" and " 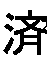 " (Japanese kanji character, pronounced as "sumi" and meaning "done") are displayed. For example, these two pieces of hand drafted data are input by User A alone. In another example, User B inputs at least one of the two pieces of hand drafted data, and each hand drafted data input by User B is rotated in a manner as described with reference to Illustration (b) and Illustration (c) of FIG. 13.

In a case that User A instructs formatting of the object, the language conversion unit 30 detects the pen ID of the pen 2500 used by User A. The detected pen ID is 1. The language conversion unit 30 acquires, from the pen information storage unit 41, the display language associated with the pen ID "1." In the present embodiment, the acquired display language is Japanese. The conversion unit 23 converts hand drafted data 521 and hand drafted data 522 into text, and the language conversion unit 30 converts the text into Japanese. Thus, as illustrated in Illustration (b) of FIG. 16, the hand drafted data 521 and the hand drafted data 522 are adjusted to Japanese text 523 " 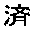 " (Japanese kanji character, pronounced as "sumi" and meaning "done") and Japanese text 524 " 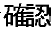 " (Japanese kanji character, pronounced as "kakunin" and meaning "check").

In another example, no text in Japanese is displayed before formatting. In this case, the language conversion unit 30 converts all texts into Japanese.

In another example, the language conversion unit 30 may change the language according to a language registered in the input data instead of the display language registered in the pen information storage unit 41. When the language registered in the input data in which PenId="1" is set is Japanese, the language conversion unit 30 converts the text converted by the conversion unit 23 into Japanese.

In a case that User A is not using the pen 2500, the hand drafted data 521 and the hand drafted data 522 are converted to the Japanese text 523 and the Japanese text 524 on the basis of a display language associated with the user ID identified by the authentication unit 34.

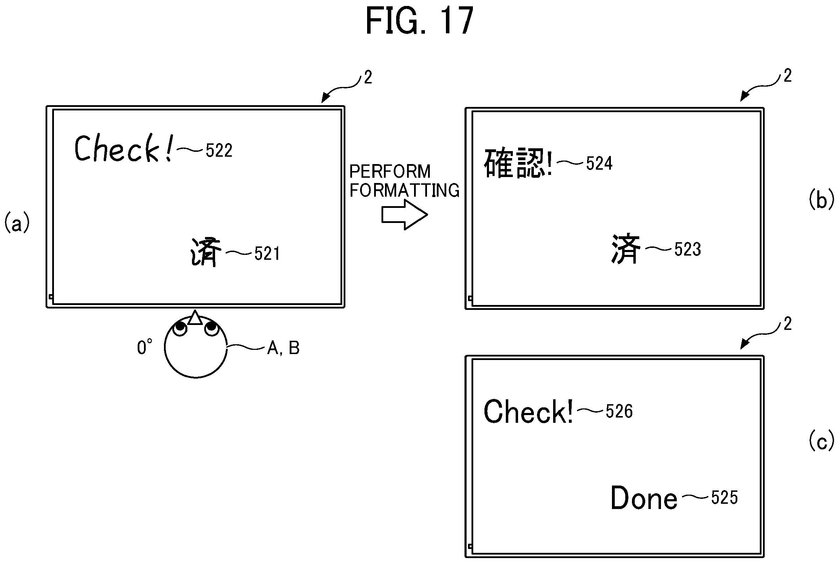

In another example, as illustrated in FIG. 17, an object is formatted on the basis of languages of multiple objects. FIG. 17 is a diagram illustrating an example of formatting of an object on the basis of languages of multiple objects. In the example of FIG. 17, Illustration (a) is the same as Illustration (a) of FIG. 16.

In a case that User A instructs formatting of the object, the pen ID of the pen 2500 used by User A is detected. The detected pen ID is 1. The language conversion unit 30 acquires, from the input data storage unit 43, the input data in which PenId="1" is set, to acquire language. The conversion unit 23 converts the hand drafted data 521 and the hand drafted data 522 into text, and the language conversion unit 30 converts the text into the acquired language (e.g., Japanese). Thus, as illustrated in Illustration (b) of FIG. 17, the hand drafted data 521 and the hand drafted data 522 are adjusted to Japanese text 523 " 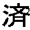 " (Japanese kanji character, pronounced as "sumi" and meaning "done") and Japanese text 524 " 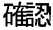 " (Japanese kanji character, pronounced as "kakunin" and meaning "check").

In a case that User B instructs formatting of the object, the pen ID of the pen 2500 used by User A is detected. The detected pen ID is 2. The language conversion unit 30 acquires, from the input data storage unit 43, the input data in which PenId="2" is set, to acquire language. The conversion unit 23 converts the hand drafted data 521 and the hand drafted data 522 into text, and the language conversion unit 30 converts the text into the acquired language (e.g., English). Thus, as illustrated in Illustration (c) of FIG. 17, the languages of the hand drafted data 521 and the hand drafted data 522 are adjusted to English text 525 "Done" and English text 526 "Check!".

### Selection of Attribute

In the above, the changes of size, the change of orientation, the change of indent, the change of form, and the change of language are described as an example of formatting of an object with reference to FIG. 11 to FIG. 17. An attribute used for the formatting among these attributes is set in advance, for example. In another example, a user may select a desired attribute each time formatting is performed.

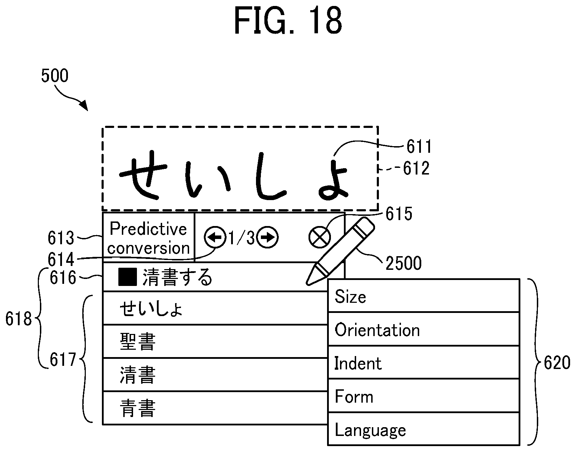

FIG. 18 is a diagram for describing how to select an attribute to be used for formatting with the operation guide 500. In response to a user's selection of the operation command candidate 616 " 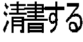 " (Japanese kanji and hiragana character, pronounced as "seisho-suru" and meaning "perform formatting"), the display control unit 24 further displays a subcommand 620. The subcommand 620 in FIG. 18 includes size, orientation, indent, form, and language. The user can select his or her desired attribute.

### Operation Procedure

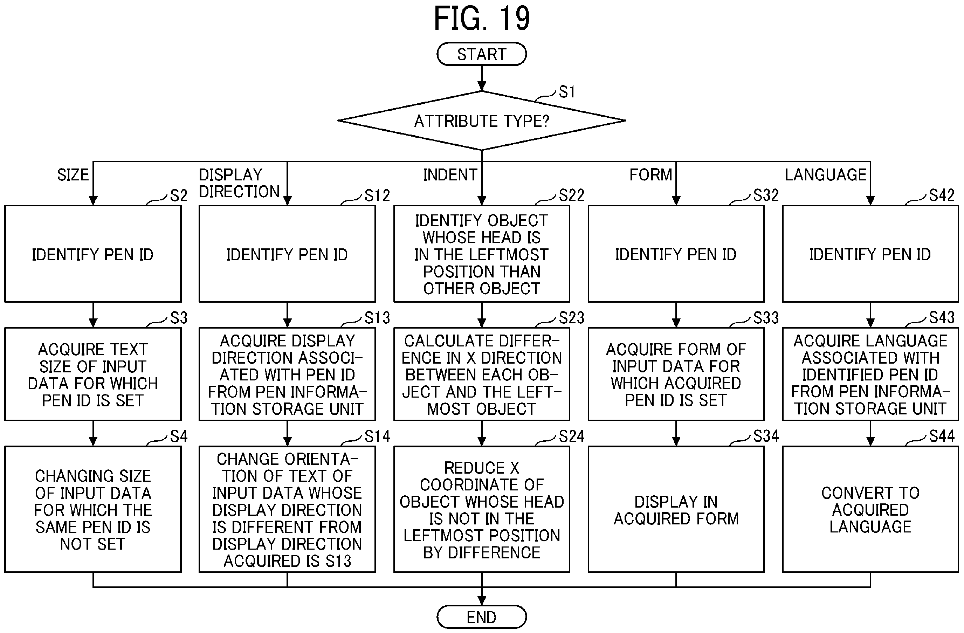

FIG. 19 is a flowchart illustrating an operation of formatting an object performed by the display apparatus 2, according to the present embodiment. The operation of FIG. 19 starts in response to an instruction of formatting by a user. In the description of FIG. 19, the pen 2500 is used, and even in a case that an object to be formatted is text or hand drafted data, conversion processing into text is omitted.

The operation receiving unit 27 determines a type of an attribute selected by the user (S1). In a case that the type of the attribute is a size, the size change unit 31 detects the pen ID of the pen 2500 used for the instruction of formatting (S2). The pen ID is transmitted from the pen 2500.

When the attribute used for formatting is the size, the size change unit 31 acquires the size of text of the input data in which the pen ID of the pen 2500 used for the instruction of formatting is set (S3).

The size change unit 31 changes the size of text of the input data in which the same pen ID as the pen ID of the pen 2500 used for the instruction of formatting is not set to the size acquired in step S3 (S4).

In a case that the attribute used for formatting is a display direction, the rotation processing unit 29 detects the pen ID of the pen 2500 used for the instruction of formatting (S12). The pen ID is transmitted from the pen 2500.

In a case that the attribute used for formatting is the display direction, the rotation processing unit 29 acquires the display direction associated with the pen ID of the pen 2500 used for the instruction of formatting from the pen information storage unit 41 (S13).

The rotation processing unit 29 changes the orientation of text of the input data in which a display direction other than the display orientation acquired in step S13 is set to the display orientation acquired in step S13 (S14).

In a case that the attribute used for formatting is the indent, the indent processing unit 32 identifies a particular object whose head is closest to the left end of the display apparatus (S22).

The indent processing unit 32 calculates a difference in the X direction between the particular object whose head is closest to the left end of the display apparatus and each object (S23).

The indent processing unit 32 reduces the X coordinate of the object whose head is not closest to the left end of the display apparatus by the difference calculated in step S23 (S24).

In a case that the attribute used for formatting is the form, the form change unit 33 detects the pen ID of pen 2500 used for the instruction of formatting (S32). The pen ID is transmitted from the pen 2500.

When the attribute used for formatting is the form, the form change unit 33 acquires the form of text of the input data in which the pen ID of the pen 2500 used for the instruction of formatting is set (S33).

The rotation processing unit 29 changes the form of text of the input data in which a form other than the form acquired in step S33 is set to the form acquired in step S33 (S34).

In a case that the attribute used for formatting is the language, the language conversion unit 30 detects the pen ID of the pen 2500 used for the instruction of formatting (S42). The pen ID is transmitted from the pen 2500.

In a case that the attribute used for formatting is the language, the language conversion unit 30 acquires the language associated with the pen ID of the pen 2500 used for the instruction of formatting from the pen information storage unit 41 (S43).

The language conversion unit 30 changes the language of text of the input data in which a language other than the language acquired in step S43 is set to the language acquired in step S43 (S44).

Although the description given above with reference to FIG. 19 is of an example in which formatting is performed on one attribute in one formatting operation, in another example, formatting is performed on multiple attributes in one formatting operation. For example, formatting based on the size and formatting based on the display direction may be performed continuously. For example, it is preferable that attributes according to which formatting is to be performed continuously are selectable from the subcommand 620 of FIG. 18.

As described above, the display apparatus 2 according to the present embodiment formats an object by adjusting the attribute values of multiple objects displayed by the display apparatus 2. This makes the objects suitable for viewing for each user.

### Embodiment 2

In the present embodiment, a description is given of how the attribute value is determined when an object is formatted as described in Embodiment 1. In the configuration and the operation described with reference to FIG. 11 to FIG. 17 of Embodiment 1, the attribute value associated with the pen ID of the pen 2500 used by the user who instructs formatting of an object or the attribute value associated with the user is used is some cases. In the present embodiment, a description is given of the pen ID of the pen 2500 used by the user or the user does not necessarily relate to the determination of the attribute value used for formatting of an object.

### Functions

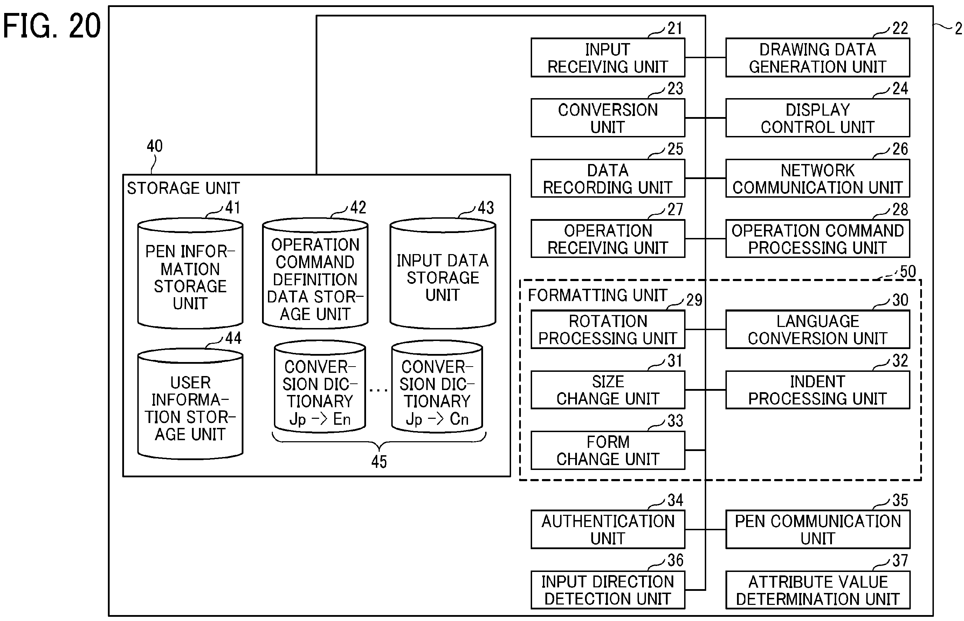

FIG. 20 is a block diagram illustrating an example of a functional configuration of the display apparatus 2 according to the present embodiment. In the following description of the example of FIG. 20, differences from the example of FIG. 4 are described. The display apparatus 2 of the present embodiment additionally includes the attribute value determination unit 37.

The attribute value determination unit 37 determines an attribute value to be used for formatting. For example, when the attribute is the display direction, the attribute value includes 0 degree, 90 degrees, 180 degrees, and 270 degrees, which are specific values of the display direction. In other words, the attribute value determination unit 37 determines an attribute value to be used for formatting for each attribute instead of an attribute value associated with the pen ID or the user information.

### Object Formatted with Attribute Value Based on User Attribute Associated with Pen

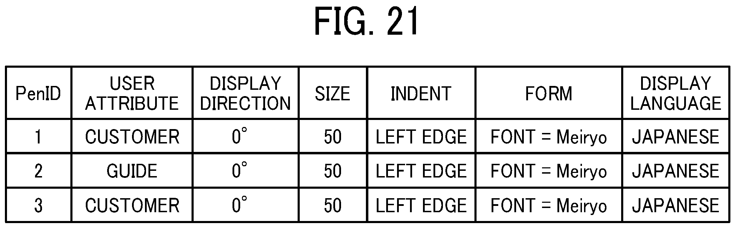

First, an example in which an attribute value associated with a pen ID is used in the present embodiment is described. FIG. 21 illustrates a modified example of the pen information stored in the pen information storage unit 41 according to the present embodiment. In the pen information storage unit 41 of FIG. 21, a user attribute is associated with the pen ID. The user attribute is a distinction between users. In the example of FIG. 21, the user attribute includes a guide and a customer. A situation is assumed in which a guide serves a customer with the display apparatus 2 is placed between the guide and the customer. The guide uses the pen 2500 for a guide and the customer uses the pen 2500 for a customer. The customer is sitting in the display direction of 0 degree and the guide may be sitting in any display direction.

The user attribute is associated with attributes including the display direction, the size, the indent, the form, and the language. When such the pen 2500 is used, the display apparatus 2 can format an object with the attribute value based on the user attribute. For example, the object faces the customer regardless of whether the guide or the customer instructs formatting of adjusting the display direction. The same applies to the size, the indent, the form, and the language. Regardless of whether the guide or the customer instructs formatting, the object is formatted with the attribute values of the size, the indent, the form, and the language so as to keep the naturalness of the visual feeling when the customer reads the object.

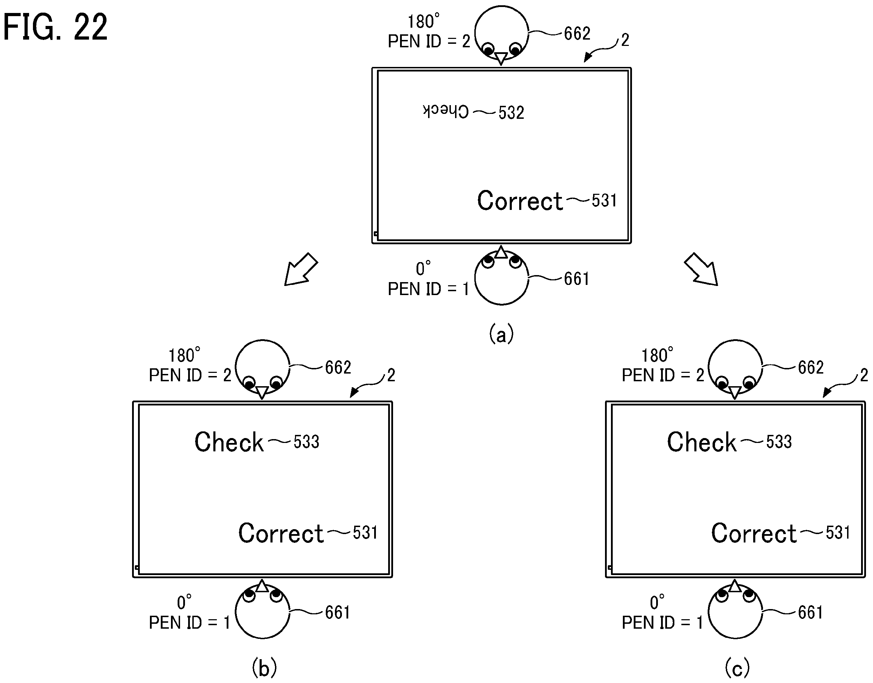

FIG. 22 illustrates an example of formatting using the pen information of FIG. 21. In Illustration (a) of FIG. 22, a customer 661 inputs text 531 "Correct", and a guide 662 inputs text 532 "Check". The display direction of the text 531 "Correct" is 0 degree, and the display direction of the text 532 "Check" is 180 degrees. For the sake of explanatory convenience, it is assumed that the size of the text 531 "Correct" is 50 points and the size of the text 532 "Check" is 25 points. Further, it is assumed that the pen ID of the customer is 1 and the pen ID of the guide is 2.

In a case that the customer 661 instructs formatting of the object, the pen ID of the pen 2500 used by the customer 661 is detected. The detected pen ID is 1. The attribute value determination unit 37 acquires, from the pen information storage unit 41, the attribute value associated with the detected pen ID. The size change unit 31 acquires all the input data in the page from the input data storage unit 43 and changes the size to the size (i.e., 50 points) associated with the customer. In another example, the size of only text input by a person other than the customer may be changed.

Further, the rotation processing unit 29 acquires all the input data in the page from the input data storage unit 43 and changes the display directions to 0 degree, which associated with the customer. The objects can be formatted in terms of the size, the indent, the form, and the language in substantially the same manner. In another example, the display direction of only text input by a person other than the customer may be changed.

As a result, as illustrated in Illustration (b) of FIG. 22, the sizes of the text 531 "Correct" and the text 533 "Check" are adjusted to the size associated with the customer, and the display directions are adjusted to 0 degree.

In a case that the guide 662 instructs formatting of the object, the pen ID of the pen 2500 used by the guide 662 is detected. The detected pen ID is 2. The attribute value determination unit 37 acquires, from the pen information storage unit 41, the attribute value associated with the detected pen ID. The size change unit 31 acquires all the input data in the page from the input data storage unit 43 and changes the size to the size (i.e., 50 points) associated with the guide 662. In another example, the size of only text input by a person other than the guide 662 may be changed.

Further, the rotation processing unit 29 acquires all the input data in the page from the input data storage unit 43 and changes the display directions to 0 degree, which associated with the guide 662. In another example, the display direction of only text input by a person other than the guide 662 may be changed.

As a result, as indicted by Illustration (c) of FIG. 22, the sizes of the text 531 "Correct" and the text 533 "Check" are adjusted to 50 points, and the display directions thereof are adjusted to 0 degree. The objects can be formatted in terms of the size, the indent, the form, and the language in substantially the same manner.

The displayed content of Illustration (b) of FIG. 22 is the same as the displayed content of Illustration (c) of FIG. 22. Thus, regardless of whether the guide or the customer instructs formatting, the object is formatted with the attributes that are set so as to keep the naturalness of the visual feeling when the customer reads the object.

### Formatting Based on Frequently Used Attribute Value

The display apparatus 2 may perform formatting with an attribute value set for the pen 2500 having an attribute value that is most frequently used.

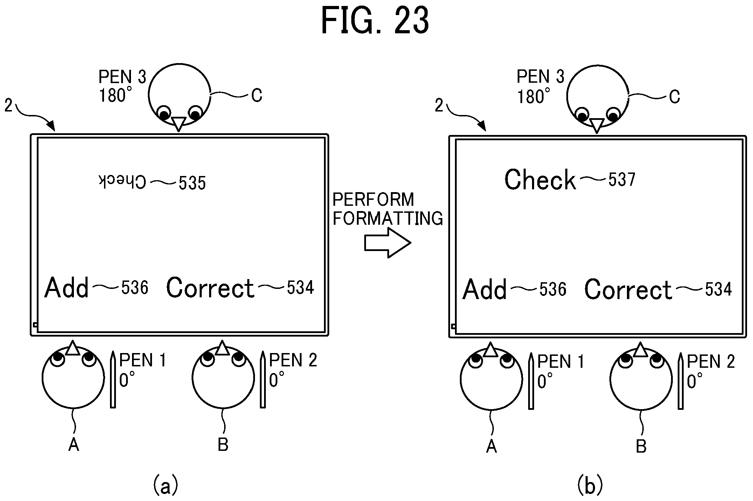

FIG. 23 is a diagram for describing an example of formatting an object on the basis of an attribute value set for the pen 2500 associated with an attribute value that is most frequently used. In FIG. 23, the display direction of Pen 1 used by User A and the display direction of Pen 2 used by User B are 0 degree. The display direction of Pen 3 used by User C is 180 degrees. In Illustration (a) of FIG. 23, text 534 "Correct" is input with Pen 2 and text 536 "Add" is input With Pen 1. Text 535 "Check" is input with Pen 3.

Since the number of the pen 2500 whose display direction is 0 degree is the largest, the attribute value determination unit 37 determines that the attribute value (i.e., display direction=0 degree) of the pen 2500 for which the display direction=0 degree is set is to be used. In other words, the display apparatus 2 formats the objects with the attribute value set for the pen 2500 whose display direction is 0 degree.

More specifically, the attribute value determination unit 37 acquires the display direction of each pen used for input from the pen information storage unit 41, and determines to perform formatting with a particular display direction associated with the pen 2500 for which the acquired number of display directions is the largest. The each pen used for input is registered in the input data in the input data storage unit 43. As a result, as indicted by Illustration (b) of FIG. 23, the display directions of the text 534 "Correct", the text 536 "Add", and text 537 "Check" are adjusted to 0 degree.

Since the number of the pen 2500 being used is large means that a large number of users uses the pen, the display apparatus 2 can format the objects so that the objects are suitable for viewing for a larger number of users.

The description given above with reference to FIG. 23 is of an example in which the most frequent display direction is identified. Further, with regard to the size, indent, form, or language, the attribute value determination unit 37 can determine the most frequent attribute value and determine the attribute value of the pen associated with the determined attribute value in substantially the same manner as described above with regard to the display direction.

In a case that a user is not using the pen 2500, the attribute value determination unit 37 acquires, for each logged-in user, the display direction associated with the logged-in user from the user information storage unit 44. The attribute value determination unit 37 determines to perform formatting with a particular display direction associated with users with whom the largest number of display directions are associated.

Formatting Based on Attribute Value Used for Object Having the Largest Number of Characters

The display apparatus 2 may perform formatting with an attribute value used for objects having the largest number of characters.

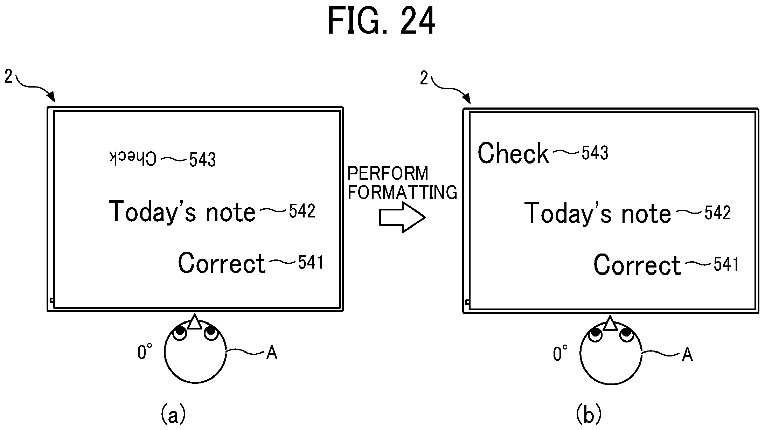

FIG. 24 is a diagram for describing an example of formatting an object using an attribute value of text having the largest number of characters. In Illustration (a) of FIG. 24, the display directions of two pieces of texts, i.e., text 541 "Correct" and text 542 "Today' note" is 0 degree, and the display direction of text 543 "Check" is 180 degrees. Accordingly, the number of characters whose display direction is 0 degree is the largest.

More specifically, the attribute value determination unit 37 acquires, for each of the multiple pieces of input data, the display direction and the number of characters from the input data storage unit 43 and accumulates the number of characters for each display direction. In the example of Illustration (a) of FIG. 24, the number of characters whose display degree is 0 degree is eighteen, and the number of characters whose display degree is 180 degree is five. The attribute value determination unit 37 determines that formatting is to be performed with the display direction in which the largest number of characters is written. As a result, as indicted by Illustration (b) of FIG. 24, the display directions of the text 541 "Correct", the text 542 "Today's note", and the text 543 "Check" are adjusted to 0 degree.

Since an object having the largest number of characters is a standard object, the display apparatus 2 can format an object with the attribute value of such the standard object.

The description given above with reference to FIG. 24 is of an example in which formatting is performed on the basis of the display direction. In another example, the attribute value determination unit 37 acquires, for each of the multiple pieces of input data, the size, indent (coordinates of the head), form, or language, and the number of characters from the input data storage unit 43 and accumulates the number of characters for each of the size, indent, form, or language. The attribute value determination unit 37 determines that formatting is to be performed with the size, the indent, the form, or the language in which the largest number of characters are written.

Since the pen ID is not used for the determination of the attribute value described with reference to FIG. 24, the attribute value determination unit 37 can determine an attribute value in substantially the same manner also for a case where the user performs input with his or her finger without using the pen 2500.

### Formatting Based on Attribute Value Used for Object Having the Largest Size

The display apparatus 2 may perform formatting with an attribute value used for an object whose size is the largest.

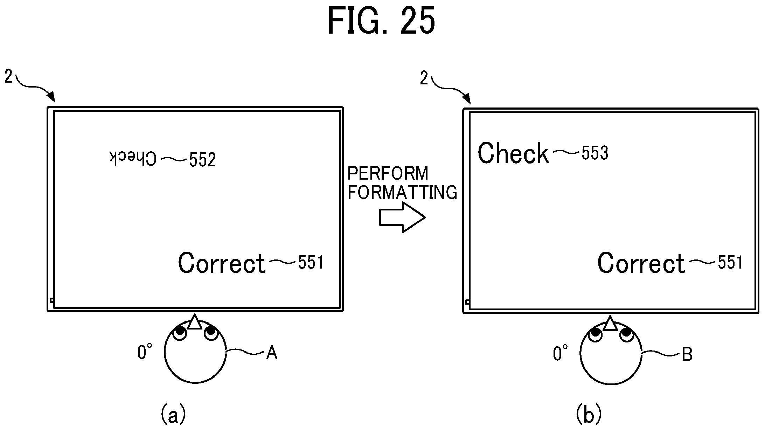

FIG. 25 is a diagram for describing an example of formatting an object on the basis of an attribute value of text whose size is the largest. In Illustration (a) of FIG. 25, the size of text 551 "Correct" is 50 points, and the size of text 552 "Check" is 25 points. Accordingly, the size of the text 551 "Correct" is the largest.

More specifically, the attribute value determination unit 37 acquires, for each of the multiple pieces of input data, the size of text from the input data storage unit 43 and determines that formatting is to be performed in a display direction registered in particular input data in which the size of text is the largest. The display direction of the text 551 "Correct" whose size is the largest is 0 degree.

As a result, as indicted by Illustration (b) of FIG. 25, the display directions of the text 551 "Correct" and the text 553 "Check" are adjusted to 0 degree.

Since an object whose size is the largest is meaningful, the display apparatus 2 can format an object with an attribute value used for displaying the meaningful object.

The description given above with reference to FIG. 25 is of an example in which the objects are formatted on the basis of the display direction. The objects can be formatted in terms of the size, the indent, the form, and the language in substantially the same manner.

Since the pen ID is not used for the determination of the attribute value described with reference to FIG. 25, the attribute value determination unit 37 can determine the attribute value in substantially the same manner also for a case where the user performs input with his or her finger without using the pen 2500.

Formatting Based on Attribute Value Used for Object Having the Largest Number of Character and Size

The display apparatus 2 may perform formatting with an attribute value used for an object whose number of characters and size are the largest.

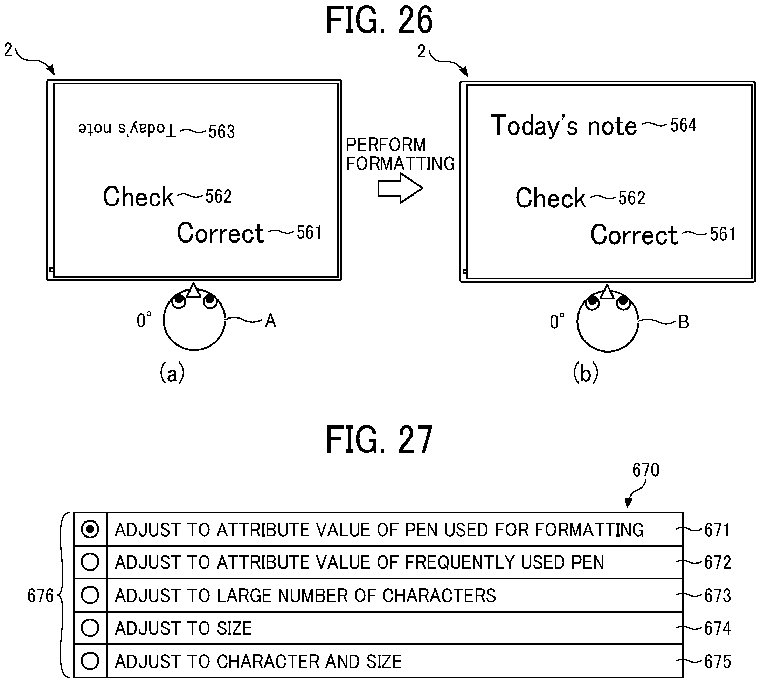

FIG. 26 is a diagram for describing an example of formatting an object on the basis of an attribute value of text having the largest weight of the number of characters and the size. In Illustration (a) of FIG. 26, seven characters of text 561 "Correct" and five characters of text 562 of "Check" are written in 30cm². Eleven characters of text 563 "Today's note" are written in 15cm².

For example, assuming that one character of text is the square of the length of one side times the number of characters, the weight of the text is as follows.
The weight of the text 561=6300=30^2^{∗}7
The weight of the text 562=4500=30^2^{∗}5
The weight of the text 563=2475=15^2^{∗}11

The attribute value determination unit 37 acquires, for each of the multiple pieces of input data, the size of text and the number of characters of text from the input data storage unit 43. The attribute value determination unit 37 performs the above-described calculation for each of the multiple pieces of input data and determines that formatting is to be performed in a display direction registered in particular input data in which text having the largest weight of the number of characters and the size is set. As described above, since the weight of the text 561 is the largest, the attribute value determination unit 37 determines that formatting is to be performed with the attribute value (display direction=0 degree) of the text 561. As a result, as indicted by Illustration (b) of FIG. 26, the display directions of the text 561 "Correct", the text 562 "Today's note", and the text 564 "Today's note" are adjusted to 0 degree.

Since an object whose weight of the size and the number of characters is the largest is meaningful, the display apparatus 2 can format an object with an attribute value used for displaying the meaningful object.

The description given above with reference to FIG. 26 is of an example in which the objects are formatted on the basis of the display direction. The objects can be formatted in terms of the size, the indent, the form, and the language in substantially the same manner.

Since the pen ID is not used for the determination of the attribute value described with reference to FIG. 26, the attribute value determination unit 37 can determine the attribute value in substantially the same manner also for a case where the user performs input with his or her finger without using the pen 2500.

### Selection of Attribute Value to be Used for Formatting

The user can set which of the attribute value determination methods described with reference to FIG. 22 to FIG. 26 is to be used by the display apparatus 2 to perform formatting.

FIG. 27 is a diagram illustrating an example of an attribute value determination method selection screen 670 displayed by the display apparatus 2. The attribute value determination method selection screen 670 is displayed in response to a user's handwriting of a recognition character string for calling an operation command and executing of an operation command using the operation guide 500. The attribute value determination method selection screen 670 displays attribute value determination methods associated with radio buttons 676.

"Adjust to Attribute Value of Pen Used for Formatting" 671 corresponds to the attribute value determination method described in Embodiment 1 or with reference FIG. 22.

"Adjust to Attribute Value of Frequently Used Pen" 672 corresponds to the attribute determination method described with reference to FIG. 23.

"Adjust to Large Number of Characters" 673 corresponds to the attribute value determination method described with reference to FIG. 24.

"Adjust to Size" 674 corresponds to the attribute value determination method described with reference to FIG. 25.

"Adjust to Character and Size" 675 corresponds to the attribute value determination method described with reference to FIG. 26.

The user selects a desired menu from the radio buttons 676, to select a desired attribute determination method. The selected attribute determination method is stored, and the attribute value determination unit 37 determines an attribute value by any one of the attribute value determination methods described with reference to FIG. 22 to FIG. 26 according to the selection result.

In one example, in a case that an attribute to be used for formatting is determined in advance, the attribute value determination method may be automatically determined.

For example, in a case that an attribute to be used for formatting is a display direction, the "Adjust to Large Number of Characters" may be determined in advance as the attribute value determination method. In a case that an attribute to be used for formatting is a size, the "Adjust to Character and Size" may be determined in advance as the attribute value determination method.

### Operation Procedure

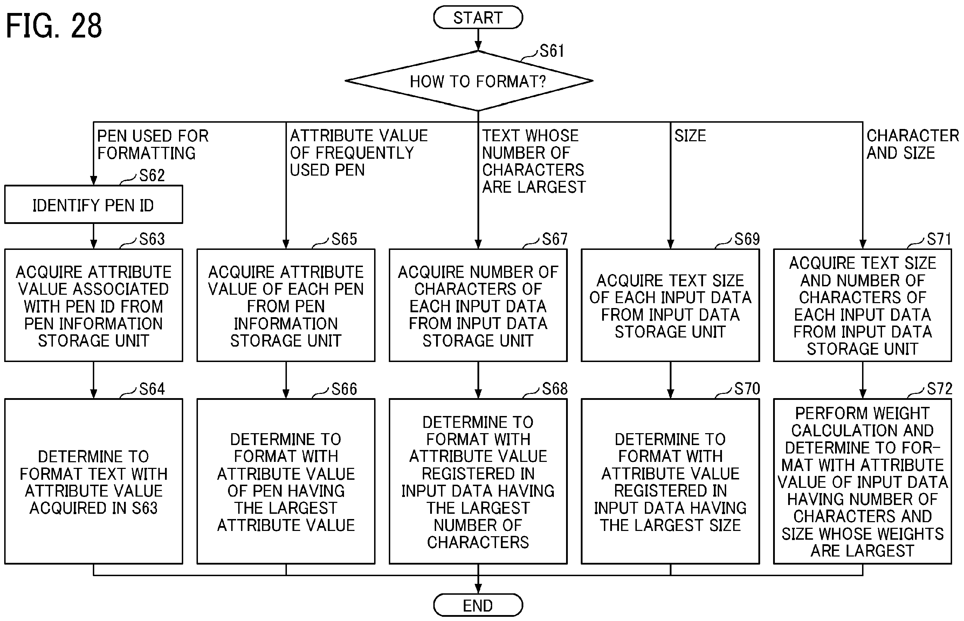

FIG. 28 is a flowchart illustrating an operation performed by the display apparatus 2 of determining an attribute value to be used for formatting an object according to an attribute value determination method selected by a user. Although the operation of FIG. 28 is an operation of determining an attribute value, an attribute to be used for formatting is determined in advance. For example, the user may select a desired attribute as described with reference to FIG. 18. In another example, a particular attribute is set by default. With reference to FIG. 28, a description is given on the assumption that the pen 2500 is used and the object is text.

The attribute value determination unit 37 identifies a particular attribute value determination method selected by a user (S61). When the identified attribute value determination method is "Adjust to Attribute Value of Pen Used for Formatting," the attribute value determination unit 37 detects the pen ID of the pen 2500 used for an instruction for execution of formatting (S62). The pen ID is transmitted from the pen 2500.

The attribute value determination unit 37 acquires, from the pen information storage unit 41, an attribute value associated with the pen ID of the pen 2500 used for the instruction for execution of formatting (S63).

The attribute value determination unit 37 determines that the text is to be formatted with the attribute value acquired in step S63 (S64).

When the identified attribute value determination method is "Adjust to Attribute Value of Frequently Used Pen," the attribute value determination unit 37 creates a list of pens being used for input and acquires the attribute value of each of the pens included in the list from the pen information storage unit 41 (S65). The list of pens being used for input is obtained from the input data storage unit 43.

When attribute values of the pens included in the list are different from each other, the attribute value determination unit 37 counts the number of pens 2500 for each attribute value. Further, the attribute value determination unit 37 determines to perform formatting with an attribute value associated with the pen 2500 for which the counted attribute value is the largest (S66). For example, in regard to the display direction, the attribute value determination unit 37 counts the number of the pens 2500 associated with 0 degree of the display direction, the number of the pens 2500 associated with 90 degrees of the display direction, the number of the pens 2500 associated with 180 degrees of the display direction, and the number of the pens 2500 associated with 270 degrees of the display direction, to identify a particular display direction, among the display directions, with which the largest number of the pens 2500 are associated.

When the identified attribute value determination method is "Adjust to Large Number of Characters," the attribute value determination unit 37 acquires, for each of the multiple pieces of input data, the number of characters and the attribute value from the input data storage unit 43 (S67).

The attribute value determination unit 37 accumulates the number of characters for each attribute value, to determine that formatting is to be performed with the attribute value for which the accumulated number of characters is the largest (S68). For example, in regard to the display direction, when the number of characters associated with the display direction of 0 degree is 10, the number of characters associated with the display direction of 90 degree is 20, the number of characters associated with the display direction of 180 degree is 30, and the number of characters associated with the display direction of 270 degrees is 40, the attribute value determination unit 37 determines that formatting is to be performed with the attribute value 270 degrees as the display direction.

When the identified attribute value determination method is "Adjust to Size," the attribute value determination unit 37 acquires, for each of the multiple pieces of input data, a size of text from the input data storage unit 43 (S69).

The attribute value determination unit 37 determines that formatting is to be performed with the attribute value registered in the input data in which the largest size of text is set (S70). For example, when the size of text registered in the input data whose data ID is n is the largest, the attribute value determination unit 37 determines that formatting is to be performed with in one or more of the display direction, size, indent, form, and language set for this input data.

When the identified attribute value determination method is "Adjust to Character and Size," the attribute value determination unit 37 acquires, for each of the multiple pieces of input data, the size and number of characters of text from the input data storage unit 43 (S71).

The attribute value determination unit 37 performs weight calculation, to determine that formatting is to be performed with the attribute value registered in the input data in which text having the largest weight of the number of characters and the size (S72). For example, when the weight of the size and the number of characters of text registered in the input whose data ID is the largest, the attribute value determination unit 37 determines that formatting is to be performed with in one or more of the display direction, size, indent, form, and language set for this input data.

According to the present embodiment, in addition to the effects of Embodiment 1, the display apparatus 2 can format objects with an attribute value other than an attribute value associated with the pen ID or the user.

### Embodiment 3

In the present embodiment, a description is given of formatting an object in a case that a display apparatus 2A at one site and a display apparatus 2B at the other site perform remote communication.

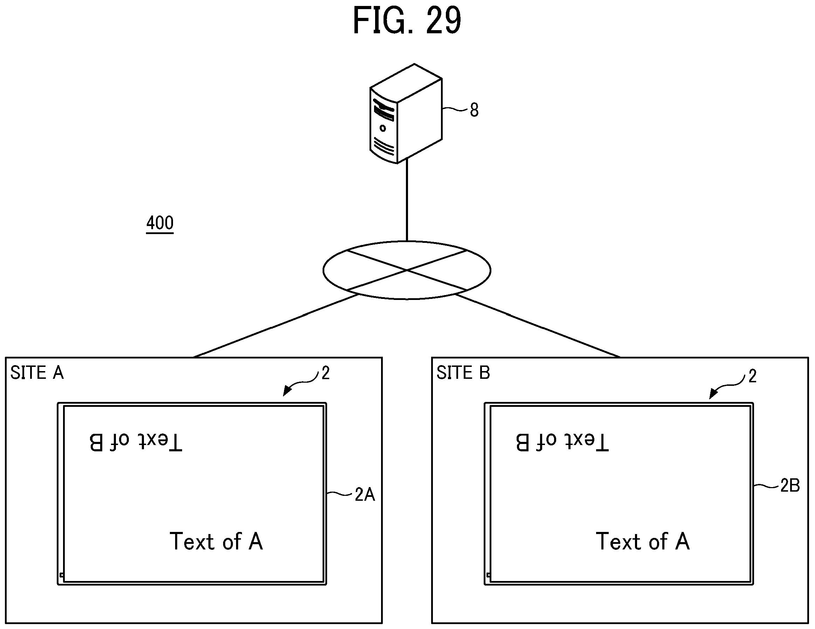

As illustrated in FIG. 29, objects can be shared at multiple sites. FIG. 29 illustrates an example of a system configuration of an information sharing system 400. The information share system 400 includes the display apparatus 2A at a site A and the display apparatus 2B at a site B. The information sharing system 400 may further include an information management server 8. The display apparatus 2A and the display apparatus 2B are communicably connected through a wide-area network such as the Internet.

The display apparatus 2A and the display apparatus 2B connects to a uniform resource locater (URL) issued by the information management server 8, to connect to the same session (e.g., the same conference). The information management server 8 shares display data such as hand drafted data among the multiple display apparatus 2 connecting to the same session.

In another example, data may be exchanged between the display apparatus 2A and the display apparatus 2B using a communication method such as web real time communication (WebRTC) without intervening information management server 8.

When input data is shared through the remote communication, formatting is performed at each site where a user instructs formatting, and content of the formatting is reflected at (shared with) the display apparatus 2 at the other site.

### Example of Hardware Configuration

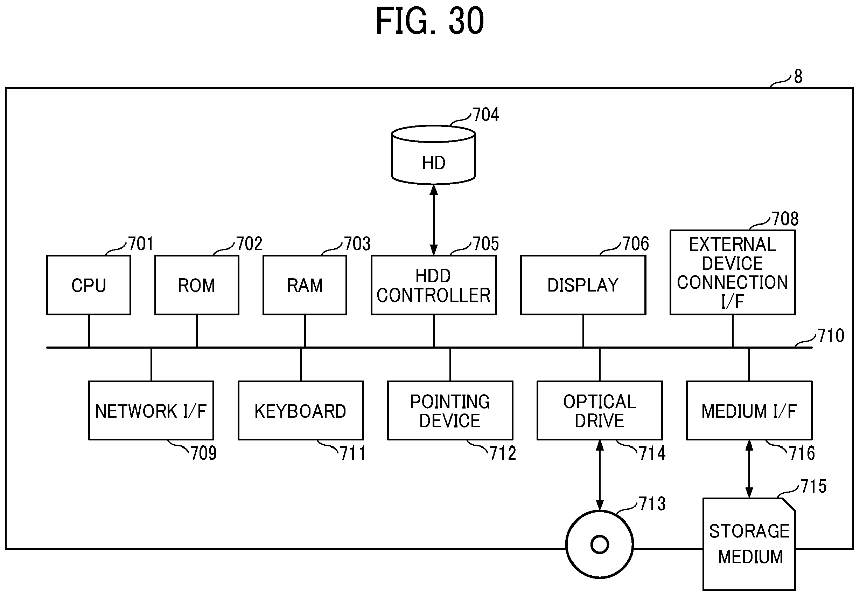

FIG. 30 is a block diagram illustrating an example of a hardware configuration of the information management server 8, according to the present embodiment. As illustrated in FIG. 30, the information management server 8 is implemented by a computer. The computer includes a CPU 701, a ROM 702, a RAM 703, a hard disk (HD) 704, a hard disk drive (HDD) controller 705, a display 706, an external device connection interface (I/F) 708, a network I/F 709, a bus line 710, a keyboard 711, a pointing device 712, an optical drive 714, and a medium I/F 716.

The CPU 701 controls overall operation of the information management server 8. The ROM 702 stores a program such as an IPL to boot the CPU 701. The RAM 703 is used as a work area for the CPU 701. The HD 704 stores various data such as programs. The HDD controller 705 controls reading and writing of various data from and to the HD 704 under control of the CPU 701. The display 706 displays various information such as a cursor, menu, window, character, and image. The external device connection I/F 708 is an interface that connects the computer to various external devices. Examples of the external devices include, but are not limited to, a USB memory and a printer.

The network I/F 709 is an interface that controls communication of data through the network. Examples of the bus line 710 include, but are not limited to, an address bus and a data bus that electrically connects the elements illustrated in FIG. 30 such as the CPU 701.

Further, the keyboard 711 is an example of an input device or input means including a plurality of keys to be used for inputting characters, numerical values, various instructions, or the like. The pointing device 712 is an example of an input device or input means that allows a user to select or execute various instructions, select a target for processing, or move the cursor being displayed. The optical drive 714 controls reading and writing of various data from and to an optical storage medium 713, which is an example of a removable storage medium. The optical storage medium 713 may be a compact disc (CD), a digital versatile disk (DVD), a Blu-ray^{®} disk, or the like. The medium I/F 716 controls reading and writing (storing) of data from and to a storage medium 715 such as a flash memory.

### Function of Information Management Server

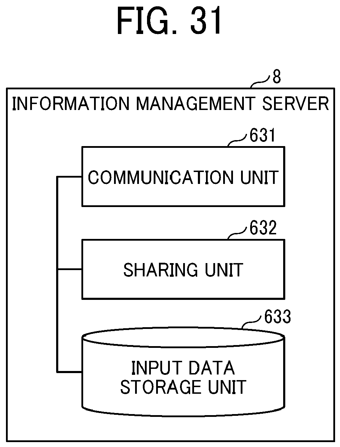

FIG. 31 is a block diagram illustrating an example of a functional configuration of the information management server 8. The information management server 8 includes a communication unit 631, a sharing unit 632, and an input data storage unit 633. These functional units of the information management server 8 are implemented by or are caused to function by operation of any of the components illustrated in FIG. 30 according to an instruction from the CPU 701 according to a program stored in the HD 704.

The communication unit 631 communicates with the display apparatus 2A and the display apparatus 2B, to transmit input data or content of formatting transmitted from one of the display apparatuses 2 to the other one of the display apparatuses 2.

The sharing unit 632 manages the display apparatuses 2 connecting to the same session, to perform processing of sharing the input data and the content of formatting between the display apparatuses 2 connecting to the same session.

The input data storage unit 633 stores data relating to objects such as hand drafted data or text in association with position information on the display 220. Content stored in the input data storage unit 633 may be the same as that of illustrated in FIG. 5.

### Example of Formatting in Remote Communication

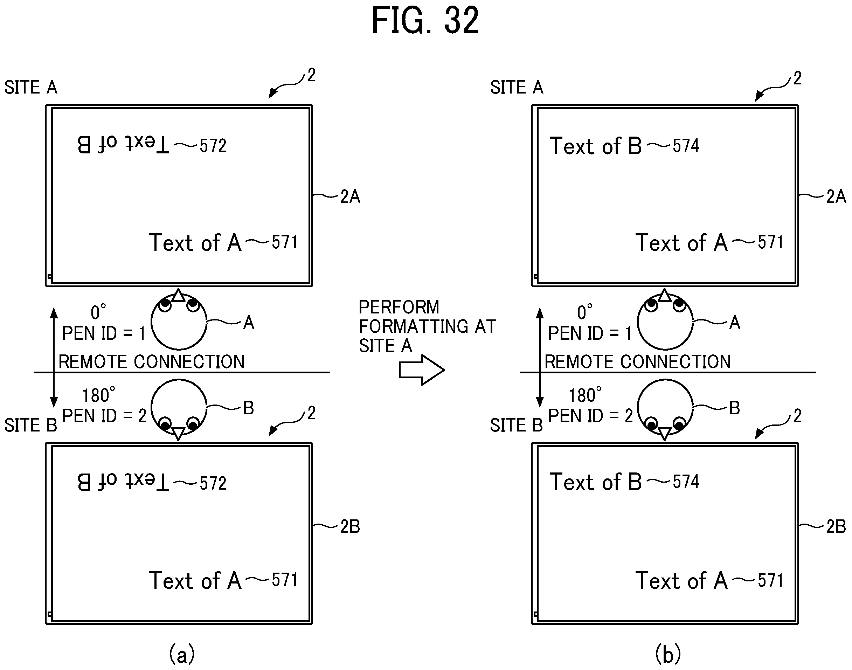

FIG. 32 is a diagram for describing formatting of an object in which an attribute of formatting at one site is shared with at the other site. User A uses the display apparatus 2A at the site A, and User B uses the display apparatus 2B at the site B. As illustrated in Illustration (a) of FIG. 32, User A is present in the display direction of 0 degree. User B is present in the display direction of 180 degrees. User A inputs text 571 "Text of A", and User B inputs text 572 "Text of B." The text 571 is an example of a first object. The text 572 is an example of a second object.

When User A instructs formatting, as illustrated in Illustration (b) of FIG. 32, the display apparatus 2A displays text 574, which is obtained by changing the orientation of the text 572 "Text of B" to 0 degree. Since the object is shared, the display apparatus 2B changes the orientation of the text 574 "Text of B" to 0 degree in substantially the same manner.

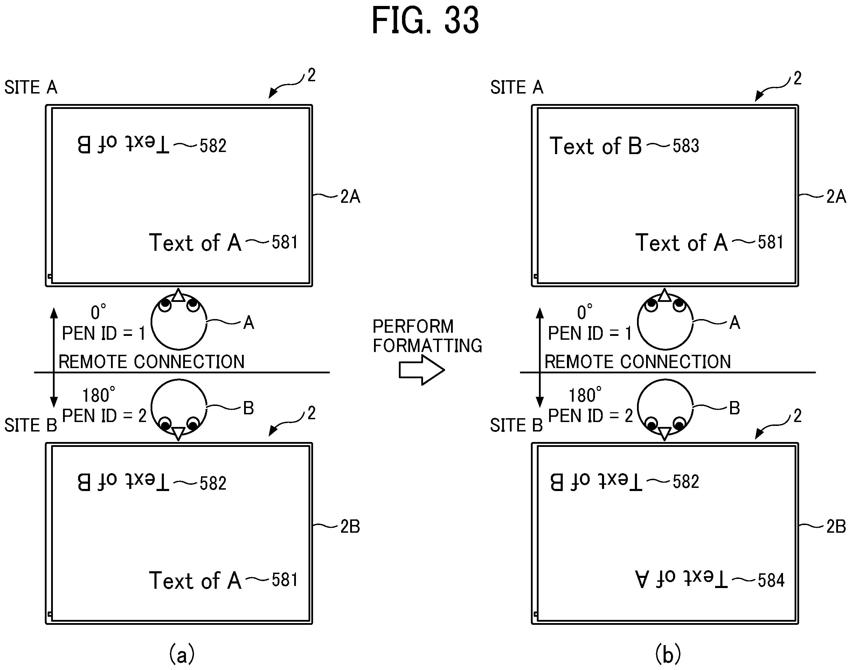

When the method describe with FIG. 32 is adopted, the text 571 and the text 574 are not suitable for viewing to User B. To address such an issue, as illustrated in FIG. 33, the display direction of the user at the site may be prioritized.

FIG. 33 is a diagram for describing formatting of an object in which formatting at one site is shared according to an attribute value corresponding to the other site. As illustrated in Illustration (a) of FIG. 33, User A is present in the display direction of 0 degree. User B is present in the display direction of 180 degrees. User A inputs text 581 "Text of A", and User B inputs text 582 "Text of B."

When User A instructs formatting, as illustrated in Illustration (b) of FIG. 33, the display apparatus 2A displays text 583, which is obtained by changing the orientation of the text 582 "Text of B" to 0 degree. The formatting command of the object is shared, and the display apparatus 2B displays text 584, which is obtained by changing the orientation of the text 581 "Text of A" to 180 degrees. In other words, the display apparatus 2B formats the object supposing that User B instructs formatting. The display apparatus 2B performs the same formatting on the text 581 as formatting performed by the display apparatus 2A on the basis of content of formatting performed by the display apparatus 2A.

The description given above with reference to FIG. 32 and FIG. 33 is of an example in which the display direction is adjusted. In another example, the display apparatus 2A and the display apparatus 2B can format objects in terms of the size, the indent, the form, and the language.

### Settings of Sharing Formatting in Remote Communication

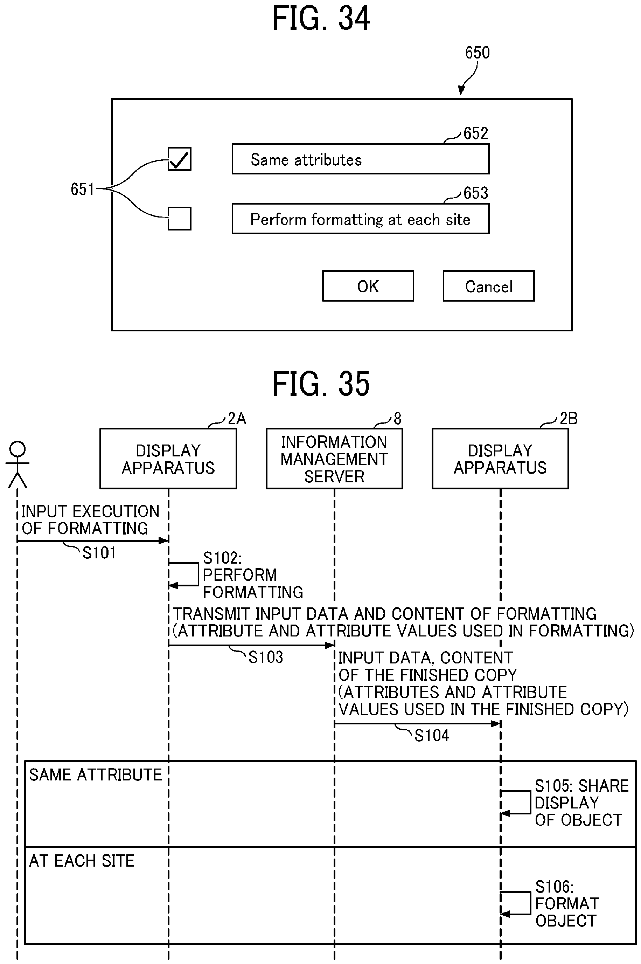

It is preferable that User A or User B can select which processing of FIG. 32 or FIG. 33 is to be performed by the display apparatus 2B. FIG. 34 illustrates an example of a formatting sharing setting screen 650 that allows User A or B to configure settings relating to formatting in remote communication.

On the formatting sharing setting screen 650, a message 652 "Same attributes" and a message 653 "Perform formatting at each site" are respectively associated with check boxes 651. The message "Same attributes" corresponds to the processing described with reference to FIG. 32, and the message "Perform formatting at each site" corresponds to the processing described with reference to FIG. 33. User A and User B can configure settings as to how the display apparatus 2A and the display apparatus 2B, which are respectively used by User A or User B, share content of formatting in remote communication. In other words, the setting of sharing formatting using the formatting sharing setting screen 650 of FIG. 34 can be performed at each site, and each user can configure settings as to how to share the content of formatting. The display apparatus 2 at each site performs formatting according to a selection result on the formatting sharing setting screen 650.

FIG. 35 is a sequence diagram illustrating an operation performed by the display apparatus 2B and the display apparatus 2A when settings are configured on the formatting sharing setting screen 650 at the display apparatus 2B.

S101: User A at the site A inputs instruction for execution of formatting to the display apparatus 2A.

S102: The operation receiving unit 27 of the display apparatus 2A receives the instruction for execution of formatting, and the formatting unit 50 (the rotation processing unit 29, the language conversion unit 30, the size change unit 31, the indent processing unit 32, or the form change unit 33) formats an object.

S103: The network communication unit 26 of the display apparatus 2A transmits the input data and the content of formatting (the attribute and the attribute value used for formatting) to the information management server 8. The content of formatting is, for example, information indicating that the display direction has been changed to 0 degree. The content of formatting is originally included in the input data. The content of formatting is transmitted so that the display apparatus 2B performs formatting on the basis of "Perform formatting at each site" as the setting of sharing formatting.

S104: The communication unit 631 of the information management server 8 receives the input data and the content of formatting and transmits the input data and the content of formatting to the display apparatus 2B connecting to the same session.

The network communication unit 26 of the display apparatus 2B receives the input data and the content of formatting. The formatting unit 50 identifies the setting of sharing formatting configured on the formatting sharing setting screen 650.

S105: In a case that the setting of sharing formatting is the "Same attributes", the display control unit 24 changes the display of the object according to the input data. In other words, the screen of the display apparatus 2B is the same as the screen of the display apparatus 2A.

S106: In a case that the setting of sharing formatting is the "Perform formatting at each site", the formatting unit 50 performs formatting according to the content of formatting. For example, in a case that the content of formatting indicates that the display direction of the object associated with the pen ID "2" is changed to 0 degree, the rotation processing unit 29 changes the display direction of the object associated with the pen ID "1" to 180 degrees. In the present example, the rotation processing unit 29 sets the pen ID and the display direction to be opposite to those of the display apparatus 2A. In another example, a conversion table or the like may be provided in advance, according to which the display apparatus 2B performs formatting on the basis of the content of formatting by the display apparatus 2A.

Further, in a case that the setting of sharing formatting is "Perform formatting at each site," the input data in the display apparatus 2A and the input data in the display apparatus 2B are different from each other. In view of this, when the remote communication is to end, the display apparatus 2A and the display apparatus 2B may inquire of the user whether to unify the input data.

### Formatting by Server

In a case that the display apparatuses 2 at different sites are connected to the information management server 8 as illustrated in FIG. 29, the information management server 8 can perform formatting.

In this case, the display apparatus 2 includes the input receiving unit 21, the drawing data generation unit 22, the display control unit 24, the network communication unit 26, the operation receiving unit 27, and the pen communication unit 35 illustrated in FIG. 4.

On the other hand, the information management server 8 includes the conversion unit 23, the data recording unit 25, the operation command processing unit 28, the formatting unit 50 (the rotation processing unit 29, the language conversion unit 30, the size change unit 31, the indent processing unit 32, and the form change unit 33), the authentication unit 34, the input direction detection unit 36, and the network communication unit 26.

The network communication unit 26 of the display apparatus 2 transmits stroke data to the information management server 8. The information management server 8 performs substantially the same operations as in the flowcharts of FIG. 19 and FIG. 28 and transmits the recognition result to the display apparatus 2.

Thus, according to the information sharing system 400, since the information management server 8 performs processing, the processing load on the display apparatus 2 is reduced. Further, since the input data is stored in the information management server 8, the display apparatus 2 or a PC at a remote location can connect to the information management server 8 and share the input data in real time.

According to the present embodiment, in addition to the effects of Embodiment 1 and Embodiment 2, each display apparatus 2 can format an object also in remote communication. The user of each site can configure the setting of formatting sharing to select "Same attributes" or "Perform formatting at each site."

### Variations

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention. Any one of the above-described operations may be performed in various other ways, for example, in an order different from the one described above.

For example, although in the description of the above-described embodiments, the stroke data is mainly converted into English, the conversion destination language of the stroke data may be another language such as Japanese, Chinese, Hindi, Spanish, French, Arabic, or Russian.

In the embodiments, the electronic whiteboard is described as an example. The electronic whiteboard may be referred to as, for example, an electronic information board. The embodiments are applicable to any information processing apparatus with a touch panel. Examples of the information processing apparatus with a touch panel include, but not limited to, a projector (PJ), a data output apparatus such as a digital signage, a head up display (HUD), an industrial machine, an imaging apparatus, a sound collecting apparatus, a medical device, a networked home appliance, a laptop computer, a mobile phone, a smartphone, a tablet terminal, a game console, a personal digital assistant (PDA), a wearable PC, and a desktop PC.

Further, in the embodiments described above, the display apparatus 2 detects the coordinates of the pen tip of the pen using the touch panel. In another example, the display apparatus 2 may detect the coordinates of the pen tip using ultrasonic waves. Further, the pen transmits an ultrasonic wave together with light emission, and the display apparatus 2 calculates a distance on the basis of an arrival time of the ultrasonic wave. The display apparatus 2 determines the position of the pen on the basis of the direction and the distance, and a projector draws (projects) the trajectory of the pen as stroke data.

The functional configuration of the display apparatus 2 are divided into the functional blocks as illustrated in FIG. 4, for example, on the basis of on main functions of the display apparatus, in order to facilitate understanding the processes performed by the display apparatus. The scope of the present disclosure is not limited by how the process units are divided or by the names of the process units. The processes implemented by the display apparatus 2 may be divided to a larger number of processes depending on the contents of processes. Further, one process may be divided to include the larger number of processes.

The functionality of the elements disclosed in the embodiments described above may be implemented using circuitry or processing circuitry which includes general purpose processors, special purpose processors, integrated circuits, application specific integrated circuits (ASICs), digital signal processors (DSPs), field programmable gate arrays (FPGAs), conventional circuitry and/or combinations thereof which are configured or programmed to perform the disclosed functionality. Processors are considered processing circuitry or circuitry as they include transistors and other circuitry therein. In the disclosure, the circuitry, units, or means are hardware that carry out or are programmed to perform the recited functionality. The hardware may be any hardware disclosed herein or otherwise known which is programmed or configured to carry out the recited functionality. When the hardware is a processor which may be considered a type of circuitry, the circuitry, means, or units are a combination of hardware and software, the software being used to configure the hardware and/or processor.

Embodiments of the present disclosure provides improvements in computer capability and functionality. These improvements allow users to take advantage of computers that provide more efficient and robust interaction with tables that is a way to store and present information on information processing apparatuses. Further, the embodiments of the present disclosure can provide a better user experience through the use of a more efficient, powerful, and robust user interface. Such a user interface provides a better interaction between humans and machines.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. A display apparatus (2), comprising:
an input receiving unit (21) configured to receive an input of hand drafted data;
a display control unit (24) configured to display, as an object, the hand drafted data or text converted from the hand drafted data; and
a formatting unit (50) configured to adjust attribute values of multiple objects displayed by the display control unit (24), the multiple objects including the object displayed based on the input.

2. The display apparatus (2) of claim 1, wherein the formatting unit (50) is configured to change an attribute value of at least one object among the multiple objects displayed by the display control unit (24) to adjust the attribute values of the multiple objects.

3. The display apparatus (2) of claim 1, wherein the formatting unit (50) is configured to change the attribute values of all of the multiple objects displayed by the display control unit (24) to adjust the attribute values of the multiple objects.

4. The display apparatus (2) of any one of claims 1 to 3, further comprising an attribute value determination unit (37) configured to determine which attribute value of an object is to be used for formatting the multiple objects displayed by the display control unit (24).

5. The display apparatus (2) of claim 4, wherein
the hand drafted data is input with an input device,
the display apparatus further comprises an operation receiving unit (27) configured to receive an instruction of execution of formatting from a tactile object as the input device,
the formatting unit (50) is configured to detect identification information of the tactile object, and
the attribute value determination unit (37) is configured to determine an attribute value associated with the identification information of the tactile object as the attribute value to be used for formatting the multiple objects.

6. The display apparatus (2) of claim 4, wherein
the hand drafted data is input with an input device,
the display apparatus further comprises:
an authentication unit (34) configured to authenticate a user, to identify identification information of the user; and
an operation receiving unit (27) configured to receive an instruction of execution of formatting from a finger of the user as the input device, and
the attribute value determination unit (37) is configured to determine an attribute value associated with the identification information of the user as the attribute value to be used for formatting the multiple objects.

7. The display apparatus (2) of claim 5, wherein the identification information of the tactile object is associated with the attribute value corresponding to an attribute of a user who uses the tactile object.

8. The display apparatus (2) of claim 4, wherein
the input receiving unit (21) is configured to receive a plurality of inputs of hand drafted data that are input with one or more input devices, the plurality of inputs of hand drafted data including the input of hand drafted data,
the attribute value determination unit (37) is configured to
in a case that each of the input means is a tactile object, create a list of a plurality of tactile objects from which the input receiving unit (21) receives an input of the obj ect,
identify one of the plurality of tactile objects having an attribute value that is the most frequent among the attribute values respectively associated with the tactile objects in the list, and
determine the attribute value associated with the identified tactile object as the attribute value to be used for formatting the multiple objects.

9. The display apparatus (2) of claim 4, wherein
the attribute value determination unit (37) is configured to
acquire a number of characters of the object from input data of the object whose input is received by the input receiving unit (21), and
determine the attribute value registered in the input data associated with the number of characters that is acquired is the largest as the attribute value to be used for formatting the multiple objects.

10. The display apparatus (2) of claim 4, wherein
the attribute value determination unit (37) is configured to
acquire a size of the object from input data of the object whose input is received by the input receiving unit (21), and
determine the attribute value registered in the input data associated with the size that is acquired is the largest as the attribute value to be used for formatting the multiple objects.

11. The display apparatus (2) of claim 4, wherein
the attribute value determination unit (37) is configured to acquire a number of characters and a size of the object from input data of the object whose input is received by the input receiving unit (21), and
determine the attribute value registered in the input data associated with a value based on the number of characters and the size that are acquired is the largest as the attribute value to be used for formatting the multiple objects.

12. The display apparatus (2) of any one of claims 4 to 11, wherein
the display apparatus displays a screen that receives a selection of one or more items based on which the attribute value is to be determined, among a plurality of items including an attribute value associated with identification information of a tactile object used for input, an attribute value that is the most frequent among attribute values respectively associated with a plurality of tactile objects used for input, a number of characters of the object, a size of the object, and the number of characters and the size of the object, and
the attribute value determination unit (37) is configured to determine the attribute value to be used for formatting the multiple objects according to a result of the selection.

13. A formatting method performed by a display apparatus, comprising:
receiving, by an input receiving unit, an input of hand drafted input data;
displaying, by a display control unit, the hand drafted data or text converted from the hand drafted data as an object; and
adjusting (S4, S14, S24, S34, S44), by a formatting unit, attribute values of multiple objects being displayed, the multiple objects including the object including the object displayed based on the input.

14. Carrier means carrying computer readable codes for controlling a display apparatus to perform a method, the method comprising:
receiving, by an input receiving unit, an input of hand drafted input data;
displaying, by a display control unit, the hand drafted data or text converted from the hand drafted data as an object; and
adjusting (S4, S14, S24, S34, S44), by a formatting unit, attribute values of multiple objects being displayed, the multiple objects including the object displayed based on the input.

15. An information sharing system (400), comprising at least two multiple display apparatuses (2A, 2B) communicable with each other through a network, wherein
each of the at least two display apparatuses (2A, 2B) including:
an input receiving unit (21) configured to receive an input of hand drafted data;
a display control unit (24) configured to display, as an object, the hand drafted data or text converted from the hand drafted data; and
a formatting unit (50) configured to adjust attribute values of multiple objects being displayed, the multiple objects including the object displayed based on the input,
wherein the formatting unit (50) of one display apparatus of the at least two display apparatuses (2A, 2B) is configured to, in response to receiving input data and a content of formatting from another display apparatus of the at least two display apparatuses (2A, 2B), adjust attribute values of the multiple objects according to the content of formatting.
